# EUROPÄISCHE PATENTSCHRIFT

(11) **EP 4 093 565 B1**
(45) Veröffentlichungstag und Bekanntmachung des Hinweises auf die Patenterteilung: **20.12.2023**
(21) Anmeldenummer: 21701090.9
(22) Anmeldetag: 18.01.2021
(51) Int. Cl.: B21F 11/00, H02K 15/04

(54) **VERFAHREN UND DRAHTVERARBEITUNGSMASCHINE ZUR HERSTELLUNG KONFEKTIONIERTER FORMTEILE**
METHOD AND WIRE PROCESSING MACHINE FOR PRODUCING PREPARED SHAPED PARTS
PROCÉDÉ ET MACHINE À USINER LES FILS MÉTALLIQUES POUR PRODUIRE DES PIÈCES MOULÉES SURMOULÉES

(30) Priorität: 23.01.2020 DE 102020200797
(43) Veröffentlichungstag der Anmeldung: 30.11.2022
(73) Patentinhaber: WAFIOS Aktiengesellschaft, 72764 Reutlingen (DE)
(72) Erfinder: STEFAN, Florian, 72525 Münsingen (DE); KUHNERT, Oliver, 72827 Wannweil (DE); RAUSCHER, Jürgen, 72805 Lichtenstein (DE)
(74) Vertreter: Patentanwälte Ruff, Wilhelm, Beier, Dauster & Partner mbB
(86) Internationale Anmeldenummer: PCT/EP2021/050925
(87) Internationale Veröffentlichungsnummer: WO 2021/148343

(56) Entgegenhaltungen:
- WO-A1-2019/243049
- WO-A1-2019/243342
- DE-A1- 2 141 513
- DE-A1- 2 142 703
- DE-A1-102017 205 633
- JP-A- H02 239 580
- US-A- 3 938 364
- US-A- 5 195 350
- US-B1- 6 427 433

## Beschreibung

### ANWENDUNGSGEBIET UND STAND DER TECHNIK

Die Erfindung betrifft ein Verfahren und eine Drahtverarbeitungsmaschine zur Herstellung konfektionierter Formteile aus Draht.

Bei den konfektionierten Formteilen kann es sich um gerade Formteile handeln, die in dieser Anmeldung auch als "Drahtstäbe" bezeichnet werden, oder um zweidimensional oder dreidimensional gebogene Biegeteile aus Draht, die zwischen den Drahtenden eine oder mehrere Biegungen aufweisen.

Auf dem Markt werden zunehmend Fahrzeuge mit voll- oder teilelektrischem Antrieb angeboten. Die Fahrzeuge besitzen meist Energiespeichersysteme mit mehreren Batteriemodulen. Die elektrische Energie muss zwischen den einzelnen Batteriemodulen transportiert werden. Dazu werden isolierte und gebogene Kupfer- oder Aluminiumschienen verwendet, die auch als "Stromschienen" bezeichnet werden. Stromschienen werden in der Regel unter Verwendung von entsprechend geformtem Flachmaterial hergestellt, z.B. Kupfer- oder Aluminiumflachdraht mit flachem Rechteckquerschnitt. Das Flachmaterial kann abschnittsweise oder durchgehend mit einer elektrisch isolierenden Isolationsschicht ummantelt sein. Bei der fertigen Stromschiene sind diese Endabschnitte typischerweise metallisch blank, also ohne Isolationsschicht, und werden in der für sie vorgesehenen Einbauumgebung im Bereich der Endabschnitte z.B. festgeschraubt, festgeklemmt oder festgelötet. Um eine zuverlässige Kontaktierung zu gewährleisten, sollten die Endabschnitte der Drähte möglichst gut zum korrespondierenden Kontaktelement passen. Um eine Nachbearbeitung der Drahtenden möglichst überflüssig zu machen, sollten die Drahtenden unmittelbar nach der Fertigung in einer Drahtverarbeitungsmaschine so konfektioniert sein, dass eine gute Passung zur Einbauumgebung gegeben ist.

Die Patentschrift DE 10 2018 114 579 B3 beschreibt ein Anwendungsgebiet konfektionierter Drahtstäbe sowie ein Verfahren und eine Vorrichtung, die zu deren Herstellung genutzt werden können, um Drähte gratfrei abzutrennen. Beschrieben wird, dass bei der Fertigung von Elektromotoren für Traktionsantriebe einzelne Wicklungselemente (Steckspulen, sog. "Hairpins") hergestellt werden, die im weiteren Prozess zu einer vollständigen Statorwicklung weiterverarbeitet werden. Um bedingt durch höheren Füllungsgrad eine höhere Effizienz von Elektromaschinen zu erreichen, würde in der Hairpin-Technologie von runden Drähten auf Drähte mit rechteckigem Querschnitt übergegangen. Im Rahmen der Herstellung der Steckspulen werden aus Endlosmaterial entsprechende Drahtabschnitte abgelängt und abgetrennt, welche nach einer Positionierung am Stator miteinander verschweißt werden. Um mit einfachen konstruktiven Mitteln ein zuverlässiges und möglichst gratfreies Abtrennen von Drähten zu ermöglichen, wird ein Verfahren vorgeschlagen, bei dem zunächst ein (gratfreies) Umformen des Drahtes an einer Drahtlängsposition in einem ersten Umformschritt durch Aufeinanderzubewegen von zwei einander in einer ersten Ebene gegenüberliegenden Umformabschnitten einer ersten Umformeinheit entlang einer ersten Bewegungsachse erfolgt. Dabei wird der Drahtquerschnitt bei diesem ersten Umformschritt von zwei gegenüberliegenden Seiten her verjüngt, beispielsweise von zwei Schmalseiten. Beim Umformen des Drahtes sind die Umformabschnitte der ersten Umformeinheit stets voneinander beabstandet, so dass ein verjüngter Drahtquerschnitt verbleibt. Danach erfolgt ein Umformen des Drahtes an derselben Drahtlängsposition in einem zweiten Umformschritt durch Aufeinanderzubewegen von zwei einander in einer zweiten Ebene gegenüberliegenden Umformabschnitten einer zweiten Umformeinheit entlang einer zweiten Bewegungsachse. Dabei wird der bereits verjüngte Drahtquerschnitt bei diesem zweiten Umformschritt von zwei weiteren gegenüberliegenden Seiten her verjüngt, beispielsweise von zwei Breitseiten. Beim Umformen des Drahtes sind die Umformabschnitte der zweiten Umformeinheit stets voneinander beabstandet, so dass der bereits verjüngte Drahtquerschnitt in weiter verjüngter Form verbleibt. Es verbleibt an der Drahtlängsposition also ein Materialsteg, der gegenüber der ursprünglichen Querschnittsform des Drahtes nach innen versetzt angeordnet ist. Zu diesem Zeitpunkt sind die vor und nach der Drahtlängsposition (der vorgesehenen Trennstelle) angeordneten Drahtabschnitte über den Materialsteg noch stoffschlüssig miteinander verbunden. Danach, also nach dem zweiten Umformschritt, erfolgt ein Zugtrennen des Drahtes an derselben Drahtlängsposition, indem eine (zumindest anteilig entlang der Drahtlängsrichtung wirkende) Zugkraft auf den Draht aufgebracht wird. Damit ist der Draht an der Drahtlängsposition abgetrennt.

Die WO2019/243342 A1 offenbart ein Verfahren zur Herstellung konfektionierter Formteile aus Draht, bei dem Draht von einem Drahtvorrat eingezogen und einer Drahtverarbeitungsmaschine zugeführt wird und Formteile vorgebbarer Drahtlänge von dem gerichteten Draht abgetrennt werden, wobei zum Trennen eines Formteils von dem zugeführten Draht zunächst an einer für die Trennung vorgesehenen Trennposition der Draht in wenigstens einer Kerboperation von zwei einander gegenüberliegenden Seiten mittels Kerbwerkzeugen derart eingekerbt wird, dass an der Trennposition zwischen gegenüberliegenden Kerben ein verjüngter Drahtquerschnitt verbleibt; und danach in einer Zerteilungsoperation der eingekerbte Draht im Bereich des verjüngten Drahtquerschnitts an der Trennposition getrennt wird.

### AUFGABE UND LÖSUNG

Es ist eine Aufgabe der Erfindung, ein Verfahren sowie eine Drahtverarbeitungsmaschine zur Herstellung konfektionierter Formteile aus Draht bereitzustellen, die es erlauben, konfektionierte Formteile mit geometrisch sehr gut definierter Gestalt der Drahtenden herzustellen.

Zur Lösung dieser Aufgabe stellt die Erfindung ein Verfahren mit den Merkmalen von Anspruch 1 bereit. Weiterhin wird eine Drahtverarbeitungsmaschine mit den Merkmalen von Anspruch 6 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das Verfahren und die Drahtverarbeitungsmaschine dienen zur Herstellung konfektionierter Formteile aus Draht. Der Begriff "konfektionierte Formteile" bezeichnet im Kontext dieser Anmeldung aus Draht hergestellte Halbzeuge oder Fertigprodukte, die eine für den Anwendungszweck gewünschte Drahtlänge sowie möglichst gut definierte Drahtenden aufweisen. Die Drahtenden sollen insbesondere eine für den Anwendungszweck geeignete Geometrie aufweisen, z.B. mit einer Fase am Drahtende. Das Ausgangsmaterial Draht ist ein langes, mehr oder weniger einfach biegsames Metallteil mit geeigneter Querschnittsform. Drähte mit kreisförmigem Querschnitt werden als Runddrähte bezeichnet. Es gibt auch Drähte mit anderen Querschnittsformen, z.B. Flachdrähte, Vierkantdrähte oder Profildrähte.

Bei den konfektionierten Formteilen kann es sich um gerade Formteile handeln, die in dieser Anmeldung auch als "Drahtstäbe" bezeichnet werden, oder um zweidimensional oder dreidimensional gebogene Biegeteile aus Draht, die zwischen den Drahtenden eine oder mehrere Biegungen aufweisen. Eine Drahtverarbeitungsmaschine zur Herstellung gerader konfektionierter Drahtstäbe wird gelegentlich als "Stabkonfektioniermaschine" bezeichnet, bei Drahtverarbeitungsmaschinen zur Herstellung gebogener konfektionierter Formteile spricht man in der Regel von Biegemaschinen. Bei den konfektionierten Formteilen kann es sich auch um Federn (z.B. Schraubenfedern) handeln, die mithilfe von Federmaschinen aus Draht hergestellt werden können.

Bei dem Verfahren wird Draht Stück für Stück kontinuierlich oder intermittierend von einem Drahtvorrat eingezogen und einer Drahtverarbeitungsmaschine zugeführt. Der Draht wird in der Drahtverarbeitungsmaschine gerichtet. Von dem Draht werden dann Formteile (Drahtabschnitte mit vorgebbarer Drahtlänge) und der gewünschten Form (Gestalt) abgetrennt.

Zwischen dem Richten und dem Trennen können eine oder mehrere Biegeoperationen durchgeführt werden, um ein Formteil mit einer oder mehreren Biegungen, also ein Biegeteil zu erzeugen. Alternativ können gerade Drahtabschnitte, sogenannte Drahtstäbe, von dem gerichteten Draht abgetrennt werden.

Zum Trennen eines Drahtstabs der gewünschten Länge von dem zugeführten Draht werden zeitlich nacheinander mehrere funktional unterschiedliche Operationen durchgeführt.

Zunächst wird das Drahtmaterial an einer für die Trennung vorgesehenen Trennposition bzw. Trennstelle in (wenigstens) einer Kerboperation von zwei einander gegenüberliegenden Seiten mittels Kerbwerkzeugen derart eingekerbt, dass an der Trennposition zwischen einander gegenüberliegenden Kerben ein Abschnitt mit einem verjüngten Drahtquerschnitt verbleibt.

Der Begriff "Kerbe" bezeichnet hierbei allgemein einen durch Materialverdrängung und/oder Materialabtrag entstandenen Einschnitt am Drahtmaterial. Die Größe und Gestalt der Kerben wird durch die in Eingriff mit dem Drahtmaterial kommende Wirkkontur der Kerbwerkzeuge und deren Eindringtiefe bestimmt.

Bei der Kerboperation handelt es sich vorzugsweise um eine Umformoperation, bei der die Kerben ausschließlich durch Materialverdrängung bzw. Materialumformung ohne Materialabtrag erzeugt werden. Die Kerben werden also vorzugsweise durch klassische Formung des Drahtmaterials im Bereich der Trennposition erzeugt.

Die Kerbwerkzeuge können z.B. eine mehr oder weniger spitz zulaufende Keilform haben. Die dadurch erzeugten Kerbe bilden dann meist einen im Wesentlichen V-förmigen, also keilförmigen bzw. spitz zulaufenden Einschnitt im Drahtmaterial. Die Form der Kerbe ist jedoch nicht auf eine V-Form beschränkt. Eine Kerbe kann im Bereich des Kerbgrundes auch mehr oder weniger stark abgerundet sein. Es ist auch möglich, Kerben in Form von den wesentlichen zylindrischen Einschnitten oder Kerben mit U-Form zu erzeugen.

Vorzugsweise werden die Kerbwerkzeuge während der Kerboperation in gegenläufige Zustellrichtungen senkrecht zur Drahtachse synchron zugestellt. Dazu kann die Kerbeinrichtung entsprechend für eine synchrone Zustellung der Kerbwekzeuge konfiguriert sein. Dadurch kann erreicht werden, dass im Idealfall beim Kerben keine resultierenden Querkräfte auf den Draht wirken und dieser durch das Kerben nicht global verbogen wird.

Vorzugsweise wird die Zustellbewegung der Kerbwerkzeuge so gesteuert, dass eine Eindringtiefe der Kerbwerkzeuge bei mindestens 10%, vorzugsweise im Bereich von 20% bis 50% der Ausdehnung des ungekerbten Drahtmaterials in der ersten Richtung liegt. Damit können im verjüngten Drahtabschnitt bzw. im taillierten Bereich des dünneren Stegs entsprechende Restbreiten (senkrecht zur Drahtlängsrichtung) verbleiben, die im Bereich von 90% oder weniger, insbesondere im Bereich von 50% bis 80% des ursprünglichen Durchmessers in der ersten Richtung liegen. Damit kann nach den Erfahrungen der Erfinder ein besonders guter Kompromiss zwischen guter Vorbereitung für die nachfolgende Schnittoperation und gleichzeitig ausreichender Stabilität im Bereich des verjüngten Drahtquerschnitts erreicht werden.

Alternativ dazu kann eine Kerbe unter Materialabtrag, z.B. mittels Fräsen oder Stanzen, erzeugt werden.

Wichtig ist, dass bei der Kerboperation innerhalb des Drahts im Bereich der Trennposition ein Drahtabschnitt mit verjüngtem Drahtquerschnitt verbleibt. Das Drahtmaterial wird also an der Trennposition nicht komplett durchtrennt, sondern Abschnitte vor und hinter den Kerben bleiben über einen verjüngten Drahtmaterialsteg einstückig miteinander verbunden. Im Bereich des verjüngten Drahtquerschnitts findet bei einer Kerboperation mittels Umformen in der Regel eine Verfestigung des Drahtmaterials statt, also eine Zunahme der mechanischen Festigkeit des Drahtwerkstoffs durch plastische Verformung.

Nach Abschluss der Kerboperation wird eine Zerteilungsoperation durchgeführt. Mithilfe der Zerteilungsoperation wird der eingekerbte Draht im Bereich des verjüngten Drahtquerschnitts an der Trennposition getrennt, indem zwei Zerteilungswerkzeuge an gegenüberliegenden Seiten des Drahts angreifen und in gegenläufige Zustellrichtungen senkrecht zur Drahtachse synchron zugestellt werden, bis das Drahtmaterial an der Trennposition durchtrennt ist.

Der Begriff "senkrecht" soll hier Richtungen umfassen, die entweder exakt senkrecht (in einem Winkel von 90°) zur Drahtachse verlaufen oder um ein oder wenige Grad, z.B. höchstens 5° von der exakt orthogonalen Richtung abweichen. Maßgeblich ist, dass im Rahmen der technologischen Toleranzen eine senkrechte Zustellung angestrebt wird. Entsprechend bedeutet der Begriff "synchron" eine Gleichzeitigkeit im Rahmen vernünftiger, durch Steuerung und Hardware bedingter technologischer Toleranzen.

Der Begriff "Zerteilen" bezeichnet in dieser Anmeldung in Anlehnung an die DIN-Norm DIN 8588 das vollständige Trennen des Drahts in zwei Teile an der Trennposition. Das Trennen erfolgt dabei auf mechanischem Wege ohne Spanbildung. Eine Zerteilungsoperation ist somit eine Trennoperation, bei der der Draht nicht zerspant, sondern spanlos (ohne Materialabtrag bzw. ohne die Erzeugung von Spänen) getrennt wird. Zerteilungswerkzeuge sind somit spanlos arbeitende Trennwerkzeuge.

Bei einer Drahtverarbeitungsmaschine zur Herstellung konfektionierter Formteile (z.B. Drahtstäbe oder Biegeteile) aus Drahtmaterial ist zum Abtrennen von Formteilen von dem gerichteten oder nach dem Richten noch ein- oder mehrdimensional gebogenen Drahtmaterial an einer für die Trennung vorgesehenen Trennposition eine Trenneinrichtung vorgesehen, die eine Kerbeinrichtung und eine zeitlich nach der Kerbeinrichtung betätigbare Zerteilungseinrichtung aufweist. Die Trenneinrichtung ist dafür eingerichtet, das Verfahren durchzuführen.

Das Verfahren kann so ausgeführt werden, dass nach dem Richten ohne zwischengeschaltete Biegeoperation gerade Drahtstäbe vorgegebener Länge von dem gerichteten Draht abgetrennt werden. Alternativ ist es möglich, dass nach dem Richten und vor dem Trennen in dem gerichteten Draht eine oder mehrere Biegungen erzeugt werden, so dass das Formteil ein Biegeteil ist.

Eine zur Durchführung des Verfahren geeignete und eingerichtete Drahtverarbeitungsmaschine weist ein Zerteilungseinrichtung auf, die im betriebsfertig eingerichteten Zustand zwei Zerteilungswerkzeuge aufweist, zwischen denen der Draht hindurchführbar ist, wobei die Zerteilungswerkzeuge zur Durchführung einer Zerteilungsoperation in gegenläufige Richtungen senkrecht zur Drahtachse synchron zustellbar sind und wobei die Zerteilungseinrichtung derart konfiguriert ist, dass der eingekerbte Draht im Bereich des verjüngten Drahtquerschnitts an der Trennposition getrennt werden kann, indem die Zerteilungswerkzeuge bei der Zerteilungsoperation in gegenläufige Richtungen senkrecht zur Drahtachse synchron zugestellt werden, bis das Drahtmaterial an der Trennposition durchtrennt ist.

Vor Beginn der Zustellung der Zerteilungswerkzeuge besteht in der Regel noch kein Berührungskontakt zwischen den Zerteilungswerkzeugen und dem Draht, so dass die Zerteilungswerkzeuge den Draht nicht halten. Im Laufe der Zustellung treten die Zerteilungswerkzeuge dann in Kontakt mit dem Draht und wirken mechanisch auf das Drahtmaterial ein. Theoretisch werden die Zerteilungswerkzeuge den Draht gleichzeitig mit gleicher Kraft kontaktieren. In der Praxis kann das aufgrund technologischer Toleranzen nicht immer gewährleistet werden. Um zu vermeiden, dass es bei einem ungleichzeitigen Eingriff der gegenüberliegend angreifenden Zerteilungswerkzeuge zu einer Verkippung des Drahts aus der idealen Drahtorientierung kommt, können vor und hinter der Trennposition zustellbare Niederhalter vorgesehen sein, die den Draht zeitlich vor und ggf. auch zu Beginn der Zerteilungsoperation temporär in der gewünschten Orientierung halten.

Durch den synchronen, beidseitigen Eingriff der Zerteilungswerkzeuge an gegenüberliegenden Seiten des Drahtmaterials kann eine globale Verbiegung des Endabschnitts vermieden werden, so dass dieser auch bei und nach der Zerteilungsoperation die gerade Form behält, die ohne Querkräfte vorliegt. Gemäß dem Verfahren hergestellte konfektionierte Drahtstäbe können in der Regel ohne Nachbearbeitung für die vorgesehene Verwendung genutzt werden. Die Weiterverarbeitung ist somit wirtschaftlicher als bisher möglich.

Im Rahmen der Erfindung gibt es unterschiedliche Möglichkeiten, die Kerboperation und die Zerteilungsoperation auszugestalten und aufeinander abzustimmen.

Gemäß einer Weiterbildung wird nach Abschluss der Kerboperation eine Zerteilungsoperation in Form einer Schnittoperation durchgeführt. Der Draht wird somit durch den Prozess des Schneidens als besondere Art des spanlosen Zerteilens getrennt. Dementsprechend ist die Zerteilungseinrichtung als Schnitteinrichtung konfiguriert, die Zerteilungswerkzeuge sind als Schnittwerkzeuge ausgelegt. Ein Schnittwerkzeug hat wenigstens eine Schneide, an der eine Schneidkante ausgebildet ist, welche vorliegend vorzugsweise eine gerade Schneidkante ist.

Vorzugsweise erfolgt die Zerteilung mittels Beißschneiden oder Scherschneiden, was nachfolgend im Detail erläutert wird.

Bei einer Variante der Schnittoperation wird das eingekerbte Drahtmaterial im Bereich des verjüngten Drahtquerschnitts, also an der Trennposition, durch Beißschneiden getrennt. Dies erfolgt so, dass das Drahtmaterial im Bereich zwischen zwei keilförmigen Schneiden von Schnittwerkzeugen in einer geeigneten Position gehalten wird und dass die Schnittwerkzeuge bzw. die keilförmigen Schneiden relativ zueinander aufeinander zubewegt werden, bis das Drahtmaterial an der Trennposition durchtrennt ist. Vor Beginn der Zustellung der Schneiden besteht in der Regel noch kein Berührungskontakt zwischen den Schneiden und dem Draht, so dass die Schneiden den Draht nicht halten. Im Laufe der Zustellung treten die Schneiden dann in Kontakt mit dem Draht und dringen in das Drahtmaterial ein.

Das Fertigungsverfahren "Beißschneiden" ist eine Variante des Keilschneidens und gehört gemäß DIN 8588 zu denjenigen Trennverfahren, die das zu trennende Werkstück ohne die Erzeugung von Spänen zerteilen. Die an den keilförmigen Schneiden ausgebildeten Schneidkanten liegen dabei in einer gemeinsamen Ebene. Die Relativbewegung kann so geführt werden, dass die Schneidkanten am Ende der Schnittoperation in Berührungskontakt miteinander stehen. Wenn das Flachmaterial bereits durchtrennt ist, bevor der Berührungskontakt zwischen den Schneidkanten entsteht, kann die Zustellbewegung auch vorher beendet werden. Beim Beißschneiden dringen die keilförmigen Schneiden von zwei gegenüberliegenden Seiten in das zu zerteilende Drahtmaterial ein. Es hat sich herausgestellt, dass durch diese Schnittart die Bildung scharfer Grate an bzw. auf den Enden des Drahtmaterials vermieden werden kann. Man kann sagen, dass die Schnittoperation einen im Wesentlichen gratfreien Schnitt von Drahtmaterial ermöglicht.

Durch den synchronen, beidseitigen Eingriff keilförmiger Schneiden der Schnittwerkzeuge an gegenüberliegenden Seiten des Drahtmaterials kann eine globale Verbiegung des Endabschnitts vermieden werden, so dass dieser auch bei und nach der Schnittoperation die gerade Form behält, die ohne Querkräfte vorliegt. Derart konfektionierte Drahtstäbe können in der Regel ohne Nachbearbeitung für die vorgesehene Verwendung genutzt werden.

Diese zweistufige Prozessvariante "Kerben und Beißschneiden" führt zu einer Trennung der vor und hinter der Trennposition liegenden Drahtabschnitte exakt an der vorgesehenen Trennposition, ohne dass von außerhalb in Drahtlängsrichtung wirkende Zugkräfte eingeleitet werden müssen. Anders als beim herkömmlichen Zugtrennen kann also auf entsprechende Vorrichtungen zum Zugtrennen verzichtet werden. Da es zum Zugtrennen erforderlich ist, in Drahtlängsrichtung wirkende Zugkräfte einzubringen, kann nicht ausgeschlossen werden, dass sich die Länge der abgetrennten Drahtstäbe dadurch geringfügig ändert, so dass es zu zugkraftbedingten Längenfehlern kommen kann. Diese Fehlerquelle ist beim Verfahren gemäß der beanspruchten Erfindung ausgeschlossen, so dass konfektionierte Formteile, z.B. Drahtstäbe, mit exakt definierten Längen zwischen den Drahtenden systematisch hergestellt werden.

Zudem ist die geometrische Gestalt der Drahtenden, die an der Trennposition entstehen, durch die Wirkgeometrie der bei der Kerboperation verwendete Kerbwerkzeuge und/oder der bei der Schnittoperation verwendeten keilförmigen Schneiden exakt definierbar. Dies gilt insbesondere dann, wenn die Kerboperation eine reine Umformoperation ist, da die Kerbwerkzeuge und die keilförmigen Schneiden nicht durch Zug und/oder durch Materialabtrag wirken, sondern lediglich durch plastische Materialverdrängung, so dass sich deren Wirkkonturen wenigstens teilweise in das Drahtmaterial oder in den Drahtenden einprägen. Somit können systematisch konfektionierte Drahtstücke (gerade oder gebogen) mit engen Längentoleranzen und mit geometrisch sehr gut definierten Drahtenden hergestellt werden.

Der zweistufige Prozess kann auch so beschrieben werden, dass der Schnittoperation, bei der das Drahtmaterial mittels "Beißschneiden" an der Trennposition durchtrennt wird, eine Kerboperation vorgeschaltet ist, in der das Drahtmaterial im Bereich der vorgesehenen Trennposition durch die Kerboperation für das Beißschneiden vorbereitet wird. Insbesondere bei einer vorbereitenden Kerboperation im Wege einer Umformung zur Erzeugung des verjüngten Drahtquerschnitts wird das Drahtmaterial in demjenigen Bereich, der später mit den keilförmigen Schneiden durchtrennt werden soll, verfestigt. Die keilförmigen Schneiden treffen somit nicht auf das nicht vorbehandelte Drahtmaterial, sondern auf bereits vorbehandeltes Drahtmaterial, welches durch die Kerboperation verfestigt ist und sich dadurch zuverlässig und sauberer trennen lässt als das im Vergleich zum verjüngten Drahtquerschnitt weichere, unverformte Drahtmaterial. Auch dieser Effekt trägt zur sauberen geometrischen Definition der Drahtenden bei.

Gemäß einer Weiterbildung sind die Kerbwerkzeuge einander in einer ersten Richtung gegenüberliegend angeordnet oder anordenbar und parallel zur ersten Richtung zustellbar, während die keilförmigen Schneiden der Schnittwerkzeuge einander in einer zweiten Richtung gegenüberliegend angeordnet oder anordenbar und parallel zur zweiten Richtung zustellbar sind, wobei die erste und die zweite Richtung senkrecht zueinander verlaufen. Die Kerboperation und die Schnittoperation wirken also in zueinander orthogonalen Richtungen auf das Drahtmaterial ein. Dadurch kann eine Verjüngung des Drahtmaterials an den Drahtenden in beiden zueinander senkrechten Richtungen erzeugt werden. Die letztendlich beim Beißschneiden erzeugte Schnittfläche bzw. Bruchfläche liegt aus allen Richtungen innerhalb der Hüllfläche des Ausgangsdrahts, so dass keine Grate verbleiben, die über den Außenumfang dieser Hüllfläche hinausragen. Die orthogonalen Wirkrichtungen von Kerboperation und Schneidoperation können bei allen Werkstückquerschnitten mit Vorteil genutzt werden, also auch bei Runddrähten. Wird ein Ausgangswerkstück mit Rechteckquerschnitt getrennt, so sollte das Drahtmaterial gegenüber der ersten und zweiten Richtung so orientiert sein, dass die erste Richtung senkrecht zu einem ersten Paar ebener Seitenflächen orientiert ist, während die zweite Richtung senkrecht zu dem anderen Paar zueinander paralleler Seitenflächen orientiert ist. Dadurch können die Kerbwerkzeuge und später die Schnittwerkzeuge jeweils im Wesentlichen gleichzeitig über die gesamte Breite der Kontaktfläche in das Drahtmaterial eingreifen, wodurch besonders gut geometrisch definierte Drahtenden entstehen.

Meist wird zunächst die Schmalseite gekerbt, bevor die Schnittwerkzeuge dann an den Breitseiten eingreifen. Dadurch bleibt die Geometrie der Kerben beim Schneiden weitgehend erhalten. Eine umgekehrte Abfolge (Kerben an den Breitseiten, Schneiden über die Schmalseiten ist jedoch auch möglich.

Es ist möglich, dass die Kerbwerkzeuge in einer senkrecht zur Drahtdurchlaufrichtung orientierten ersten Ebene liegen und die keilförmigen Schneiden der Schnittwerkzeuge der Schnitteinrichtung in einer senkrecht zur Drahtdurchlaufrichtung liegenden zweiten Ebene liegen, die in Drahtdurchlaufrichtung versetzt zur ersten Ebene liegt. Durch diese Anordnung können sich konstruktive Freiheitsgrade für die Ausgestaltung der Schnitteinrichtung und der Kerbeinrichtung ergeben. Allerdings muss der Materialtransport zwischen den beiden Ebenen mit hoher Genauigkeit erfolgen, um sicherzustellen, dass die Schnittoperation ausreichend genau an der Position eingreift, an der vorab die Kerben eingebracht wurden.

Bei bevorzugten Ausführungsformen wird das Drahtmaterial zwischen der Kerboperation und der Schnittoperation nicht in Drahtlängsrichtung fortbewegt, so dass die Kerboperation und die Schnittoperation in derselben Ebene durchgeführt werden. Konstruktiv kann das dadurch gelöst werden, dass die Kerbwerkzeuge der Kerbeinrichtung, genauer gesagt deren wirksame werkzeugzugewandte Enden, und die Schneidkanten an den Schneiden der Schnittwerkzeuge bzw. der Schnitteinrichtung in einer gemeinsamen Ebene angeordnet sind. Bei dieser Ausführungsform können unabhängig vom Bewegungszustand des Drahts das Einkerben und das Schneiden präzise an der vorgesehenen Trennposition erfolgen, so dass sich kein axialer Versatz zwischen Kerben und Trennstelle am Draht ergibt. Die Formen der Drahtenden können exakt durch die Werkzeugformen der Kerbwerkzeuge und der Schneiden vorgegeben werden.

Für die Ausgestaltung der Kerbwerkzeuge gibt es unterschiedliche Möglichkeiten. Bei bevorzugten Ausführungsformen sind die Kerbwerkzeuge als dachförmige Kerbkeile mit scharfem oder abgerundetem Spitzenbereich ausgebildet, also ebenfalls im Wesentlichen keilförmig. Es kann günstig sein, wenn die keilförmigen Kerbwerkzeuge als symmetrische Keile gestaltet sind. Der Begriff "symmetrischer Keil" bezeichnet hierbei einen Keil, bei welchem die Keilflächen bzw. Keilwangen im Wesentlichen symmetrisch zur Zustellrichtung geneigt sind. Hierdurch ist beim Einkerben eine beidseitige symmetrische Materialverdrängung erreichbar. Auch asymmetrische Keilformen sind möglich, z.B. wenn die Drahtenden eines Formteils unterschiedlich gestaltet sein sollen.

Der Keilwinkel, also der von im Wesentlichen ebenen Keilflächen eingeschlossene Winkel, kann der Anwendung entsprechend gewählt werden. Bei vielen Ausführungsformen liegt der von den Keilflächen eingeschlossene Keilwinkel im Bereich von 90° bis 140°, es handelt sich also um einen stumpfen Winkel. Mit dieser Geometrie können beispielsweise Fasen an den Drahtenden präzise erzeugt werden.

Alternativ oder zusätzlich kann vorgesehen sein, dass die keilförmigen Schneiden der Schnittwerkzeuge einen Keilwinkel im Bereich von 90° bis 140° aufweisen. Insbesondere kann es so sein, dass die Keilwinkel an Kerbkeilen im Wesentlichen mit den Keilwinkeln an den keilförmigen Schneiden übereinstimmen. Hierdurch ist es möglich, beispielsweise an Drahtmaterial mit Rechteckquerschnitt gleichmäßig geneigte Fasen an allen vier Seitenflächen zu erzeugen. Die keilförmigen Schneiden können symmetrisch zur Zustellrichtung gestaltet sein, ggf. auch asymmetrisch.

Die Kerbwerkzeuge und/oder die keilförmigen Schneiden können jeweils einen eigenen Antrieb besitzen, der die Zustellungsbewegung verursacht. Vorzugsweise weist die Kerbeinrichtung jedoch nur einen einzigen Antrieb auf, der mit beiden Kerbwerkzeugen zur synchronen Zustellung gekoppelt ist. Dies ist einerseits eine kostengünstige Lösung, da ein Antrieb eingespart werden kann. Zum anderen kann dadurch die Präzision der gegenläufigen Zustellung der Kerbwerkzeuge bei der Kerboperation konstruktiv sichergestellt werden.

Analog kann bei der Schnitteinrichtung vorgesehen sein, dass diese nur einen einzigen Antrieb aufweist, der mit beiden keilförmigen Schneiden zur synchronen Zustellung gekoppelt ist.

Bei manchen Ausführungsformen treibt der Antrieb der Kerbeinrichtung eine Kurbelwelle an, die über zwei Pleuel zwei gegenläufig linear verschiebbare Schieber antreibt, die jeweils die Kerbwerkzeuge an ihren werkstückzugewandten Enden tragen. Eine analoge Lösung kann bei der Schnitteinrichtung vorgesehen sein.

Eine alternative Lösung sieht vor, dass zur Steuerung der Bewegungen der Kerbwerkzeuge der Kerbeinrichtung und der keilförmigen Schneiden der Schnitteinrichtung nur ein einziger Antrieb vorgesehen ist. Dieser kann eine Kurvenscheibe mit einer Steuerkurve antreiben, die so ausgelegt ist, dass bei Drehung der Kurvenscheibe um ihre Drehachse im richtigen Takt und im richtigen Drehsinn und im richtigen Ausmaß abwechselnd zunächst die Kerbwerkzeuge zugestellt und zurückgezogen und danach die Schnittwerkzeuge mit den keilförmigen Schneiden in Richtung Werkstück zugestellt und dann zurückgezogen werden können. Zur Anpassung dieser Variante an unterschiedliche Drahtgeometrien können die Kurvenscheiben auswechselbar sein, so dass sie gegen Kurvenscheiben mit anderer Steuerkurve ausgewechselt werden können.

Die Trenneinrichtung bzw. deren Komponenten können maschinenfest am Maschinengestell der Drahtverarbeitungsmaschine montiert sein. Bei manchen Ausführungsformen ist dagegen vorgesehen, dass die Trenneinrichtung parallel zur Durchlaufrichtung des Drahts bzw. zur Durchlaufachse schwimmend gelagert ist. Damit kann die Trenneinrichtung beim Kerben und/oder beim Zerteilen auftretende resultierende Kräfte in Längsrichtung des Drahts durch eine Schwimmbewegung parallel zur Durchlaufrichtung des Drahts ausgleichen. Es hat sich gezeigt, dass dadurch unter anderem erreicht werden kann, dass die Drahtgeometrie an den Drahtenden besonders exakt den Vorgaben entspricht und dass die Drahtstücke in der Nähe der Drahtenden nicht verbogen, sondern gerade sind. Es ist auch möglich, dass die Trenneinrichtung mithilfe eines Antriebs (z.B. Servomotor) aktiv parallel zur Durchlaufrichtung des Drahts bewegbar ist.

Bei Drahtverarbeitungsmaschinen, die konfektionierte Formteile in Form von Biegeteilen herstellen sollen, ist eine entsprechende Biegeeinrichtung mit einem oder mehreren Biegewerkzeugen vorgesehen. Die Biegeeinrichtung ist derart angeordnet und ausgebildet, dass die Trennung nach Abschluss aller vorgesehenen Biegeoperationen zwischen dem fertig gebogenen Formteil und dem zugeführten, noch nicht gebogenen Drahtabschnitt erfolgt. Konstruktiv gibt es dafür mehrere Möglichkeiten. Die Biegeeinrichtung kann der Trenneinrichtung in Durchlaufrichtung des Materials nachgeschaltet sein, so dass ein axialer Abstand zwischen beiden existiert. Es ist auch möglich, dass die Biegeeinrichtung bzw. deren Werkzeuge in derselben Ebene liegen wie die Trenneinrichtung. Die Werkzeuge der Biegeeinrichtung können also in der Trennebene wirken. Die fertigen Formteile können beispielsweise mithilfe einer Sortiereinrichtung in Gutteile und problematische Teile sortiert und später abtransportiert werden. Ähnliches ist auch bei Drahtverarbeitungsmaschinen möglich, die als Stabkonfektioniermaschinen dazu ausgebildet sind, gerade Drahtstäbe mit definierten Drahtenden zu erzeugen.

Manche Ausführungsformen zeichnen sich dagegen dadurch aus, dass ein Transportgreifer zum Greifen eines abzutrennenden Drahtabschnitts vor der Kerboperation und/oder der Schnittoperation zum Transportieren des abgetrennten Drahtabschnitts nach Abschluss der Schnittoperation zu einer nachgeschalteten Arbeitsstation vorgesehen ist. Der Transportgreifer kann parallel zu einer Drahttransportachse linear verschiebbar geführt und während der Kerboperation und/oder während der Schnittoperation kraft- und momentenreduziert geschaltet sein, so dass der Transportgreifer Längenausgleichsbewegungen des abzutrennenden Drahtabschnitts während der Kerboperation und/oder während der Schnittoperation schwimmend folgen kann. Somit ist auch bei den Einrichtungen zum Weitertransport abgelängter konfektionierter Formteile sichergestellt, dass bei bereits ergriffenem Formteil keine Zwangskräfte auf den Trennprozess rückwirken.

Um weiterhin sicherzustellen, dass die Trennoperation nicht durch parallel zur Drahtlängsachse wirkende Zugkräfte negativ beeinflusst werden kann, ist die Transporteinrichtung vorzugsweise so konfiguriert, dass die Transportbewegung erst nach Abschluss der Schnittoperation, also erst dann, wenn das abzutrennende Formteil auch tatsächlich vom zugeführten Draht abgetrennt ist, beginnen kann. Der Zugriff auf das abzutrennende Formteil kann dagegen bereits vor dem vollständigen Durchtrennen des Drahts erfolgen.

Andere Weiterbildungen kombinieren die Verfahrensschritte Kerben und nachfolgendes Scheren. Damit können u.a. folgende Probleme adressiert werden.

Zum prozesssicheren Fügen von Hairpins (Steckspulen) in ein Statorblechpaket mit Nutisolationspapier werden möglichst gratfreie, angefaste Enden an den Hairpin-Schenkeln bevorzugt. Beim Beißschneiden oder beim Zugtrennen kann abhängig vom Keilwinkel der Kerb- und Schneidwerkzeuge eine mehr oder weniger spitze Pyramidenform entstehen. Nach dem Stecken und Verschränken der Hairpins im Statorblechpaket werden die Hairpin-Enden in der Regel mittels Schweißprozess kontaktiert. Häufig werden die spitzen Enden der Hairpin-Schenkel daher vor dem Schweißprozess nachgeschnitten, so dass senkrechte Flächen entstehen, die besser miteinander verschweißt werden können.

Gemäß einer Weiterbildung der vorliegenden Erfindung kann das Nachschneiden ohne Qualitätseinbußen eingespart werden.

Bei dieser Weiterbildung ist die Zerteilungsoperation als Scheroperation ausgelegt, bei der der Draht an der Trennposition durch Scherung getrennt wird, indem der Draht zwischen zwei als Scherwerkzeuge ausgebildeten Zerteilungswerkzeugen gehalten wird, die an unterschiedlichen axialen Seiten der Trennposition angreifen und in gegenläufige Zustellrichtungen senkrecht zur Drahtachse synchron bewegt werden, bis das Drahtmaterial an der Trennposition durchtrennt ist.

Entsprechend ist die Zerteilungseinrichtung als Schereinrichtung ausgelegt, die im betriebsfertig eingerichteten Zustand für die Scheroperation konfiguriert ist.

Eine Scherung resultiert in der Mechanik bekanntlich aus der Wirkung eines versetzt angeordneten Kräftepaars. Die Kräfte werden über die Scherwerkzeuge eingebracht, von denen eines in Drahtlängsrichtung vor und das andere an in Drahtlängsrichtung hinter der Trennposition an der bezüglich der Drahtachse gegenüberliegenden Seite angreift. Die Kräfte greifen also an axial versetzten Positionen am Draht an. Dazwischen liegt die Trennposition. Dort entsteht bei korrekter Verfahrensführung am freien Drahtende eine relativ glatte Scherfläche, die senkrecht zur Drahtlängsachse orientiert ist.

Die Scherwerkzeuge können eine nicht-schneidende, flächig ausgedehnte Arbeitsfläche aufweisen und sich nahe der Trennposition flächig und materialschonend an axial und radial gegenüberliegenden Seitenflächen des Drahts abstützen und bei gegenläufiger Zustellung der Scherwerkzeuge diejenigen Kräfte einleiten, die an der Trennposition zur Trennung durch Scherung führen.

Bevorzugt ist die Verwendung von Scherwerkzeugen mit Schneidkante. Anders ausgedrückt kann die Schnittoperation auch als Scherschneidoperation ausgestaltet sein.

Insbesondere im Hinblick auf diese oben skizzierte Anwendung bei der Herstellung von Hairpins wird eine Weiterbildung mit Scherschneidoperation vorgeschlagen, die eine Vereinfachung des Gesamtprozesses ermöglicht und Folgeprozesse, wie das Nacharbeiten der Schenkelenden entbehrlich machen kann.

Die dem Kerben nachfolgende Zerteilung erfolgt bei dieser Variante durch Scherschneiden. Das Scherschneiden oder Scheren ist gemäß DIN 8588 das Zerteilen eines Werkstoffes durch zwei sich aneinander vorbeibewegende Schneiden. Im Rahmen dieser Anmeldung gilt gemäß einer modifizierten Definition, dass der Werkstoff beim Scheren durch zwei Schneiden zerteilt wird, die sich aneinander vorbeibewegen können, aber nicht in jedem Fall müssen. Die Schneiden liegen anders als beim Beißschneiden nicht in einer gemeinsamen Ebene, sondern in gegeneinander geringfügig axial versetzten Ebenen. Bei relativ weichen Werkstoffen, wie z.B. Kupfer, müssen sich die Schneiden in der Regel aneinander vorbeibewegen, um eine Trennung zu erreichen. Bei härteren, spröderen Werkstoffen, wie z.B. Federstahl, kann es sein, dass das Material reißt und damit die Trennung vollendet ist, bevor die Schneiden einander erreichen. Die Zustellung kann dann gestoppt werden.

Für das Scherschneiden sind die Scherwerkzeuge analog zu einer Schere mit Schneidkanten ausgestattet, die sich beim Scherprozess gegenläufig in zueinander versetzten Ebenen bewegen und ggf. aneinander vorbeibewegen. Der Werkstoff wird dabei durch Scherkräfte abgeschert. Die Schneiden bewegen sich dabei parallel zu einer dazwischenliegenden Schnittebene, zwischen den Schneiden befindet sich ein schmaler Scherspalt. Die Schnittebene ist an der Trennposition positioniert. Durch Scherschneiden kann erreicht werden, dass die Stirnfläche des abgetrennten Drahts an der Trennposition im Wesentlichen in einer zur Drahtlängsachse senkrechten Ebene liegt. Der Endabschnitt des Drahts kann die Gestalt eines Pyramidenstumpfs aufweisen. Eine flache, makroskopisch ebene Stirnfläche kann unter anderem in Fällen vorteilhaft sein, in denen der Draht in nachfolgenden Verarbeitungsschritten auf Stoß mit einer anderen Komponente flächig verbunden werden soll, z.B. durch Verschweißen.

Damit wird u.a. ein Trennverfahren bereitgestellt, bei dem ein angefastes Drahtende zum leichten Fügen in ein Statorblechpaket entsteht und außerdem eine gerade Fläche am Drahtende verbleibt, die zum prozesssicheren Schweißen benötigt wird. Somit kann auf den Folgeprozess "Hairpinenden nachscheiden" verzichtet werden, was die Herstellkosten in der Statorfertigung senkt.

Als Vorbereitung für die Scheroperation, insbesondere zur Scherschneidoperation, hat es sich als günstig herausgestellt, wenn der Draht vorher an vier Seiten, die einander paarweise gegenüberliegen, eingekerbt wird. Die Kerben liegen bei Drähten mit Rechteckquerschnitt vorzugsweise an allen im Wesentlichen ebenen Seitenflächen. Dazu ist die Kerbeinrichtung entsprechender Ausführungsformen derart konfiguriert, dass in der der Scheroperation vorgeschalteten Kerboperation der Draht zunächst an zwei in einer ersten Richtung gegenüberliegen Seiten und danach an zwei in einer zweiten Richtung gegenüberliegen Seiten eingekerbt wird, wobei die erste und die zweite Richtung senkrecht zueinander verlaufen.

Für die Kerboperation und die Zerteilungsoperation können unterschiedliche, speziell für die jeweiligen Operationen ausgelegte Werkzeuge verwendet werden. Das ist jedoch nicht zwingend. Bei manchen Ausführungsformen wird für die Kerboperation und für die Zerteilungsoperation an gegenüberliegenden Seiten des Drahts je ein Kombinationswerkzeug verwendet, welches (wenigstens) ein integriertes Kerbwerkzeug und ein integriertes Trennwerkzeug aufweist, wobei die Kombinationswerkzeuge zeitlich nacheinander paarweise synchron in zwei zueinander senkrechten Richtungen zugestellt werden. Die Kerbfunktion und die Zerteilungsfunktion (z.B. durch Beißschneiden oder durch Scherschneiden) sind dabei in einem einzigen Werkzeug intergiert. Die werkzeugtragenden Komponenten der Drahtverarbeitungsmaschine müssen dann die benötigten Bewegungsfreiheitsgrade haben, die Zustellungen in orthogonale Zustellrichtungen erlauben.

Ein Kombinationswerkzeug kann z.B. für die Schrittfolge Kerben-Beißschneiden ausgelegt sein. Ein anderes Kombinationswerkzeug kann für die Schrittfolge Kerben-Kerben-Scherschneiden ausgelegt sein.

Im Übrigen können bei den Varianten, bei denen die Zerteilung durch Scherung, insbesondere durch Scherschneiden, erzeugt wird, viele begleitende Merkmale und Maßnahmen analog zu den Varianten mit Zerteilen durch Beißschneiden gewählt werden. Dazu gehören insbesondere die Nutzung eines einzigen Antriebs für unterschiedliche Arbeitsbewegungen eines Werkzeugs und/oder der Einsatz eines Transportgreifers und/oder die bevorzugten Dimensionen von Kerbtiefen, Kerbwinkeln und/oder das Ruhen des Drahts während der Schritte der Trennoperation.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt eine Seitenansicht einer als Stabkonfektioniermaschine ausgelegten Drahtverarbeitungsmaschine gemäß einem Ausführungsbeispiel;
- Fig. 2: zeigt eine der Trenneinrichtung nachgeschaltete Transporteinrichtung zum individuellen Weitertransport bzw. zur Übergabe der abgetrennten Drahtstäbe zu einer nachgeschalteten Weiterverarbeitungsmaschine;
- Fig. 3: zeigt eine isometrische Ansicht mit Komponenten der Trenneinrichtung in Fig. 1;
- Fig. 4: zeigt einen senkrechten Schnitt durch die Trenneinrichtung von Fig. 1 in derjenigen Ebene (Trennebene), in welcher die Kerbwerkzeuge und die keilförmigen Schneiden der Schnitteinrichtung wirken;
- Fig. 5: zeigt eine Teilansicht von Komponenten der Schnitteinrichtung;
- Fig. 6: zeigt schematisch eine Kerboperation;
- Fig. 7: zeigt schematisch eine der Kerboperation aus Fig. 6 folgende Schnittoperation;
- Fig. 8: zeigt eine Seitenansicht eines anderen Ausführungsbeispiels einer Drahtverarbeitungsmaschine in Form einer Biegemaschine mit zweistufiger Trenneinrichtung;
- Fig. 9: zeigt die Biegemaschine aus Fig. 8 in isometrischer Ansicht;
- Fig. 10: zeigt ein vergrößertes Detail der Ansicht in Fig. 9;
- Fig. 11A: zeigt Ansichten eines erzeugten Drahtendes eines Flachdrahts von der Breitseite (obere Teilfiguren) und von der Schmalseite (untere Teilfiguren) nach dem einstufigen Trennen mittels Beißschneidens (links FEM-Simulation, spiegelbildlich rechts eine photographische Abbildung;
- Fig. 11B: zeigt analog zu Fig. 11A Ansichten eines erzeugten Drahtendes eines Flachdrahts nach dem zweistufigen Trennen (Kerben und nachfolgendes Beißschneiden) gemäß einer Ausführungsform der Erfindung;
- Fig. 12: zeigt schematisch ein alternatives Antriebskonzept mit einer Kurvenscheibe;
- Fig. 13A, 13B: zeigen schematisch zwei Werkzeuge mit jeweils zwei im Winkel zueinander ausgerichteten, keilförmigen Schneiden, wobei die Werkzeuge sowohl als Kerbwerkzeuge als auch als Schnittwerkzeuge verwendet werden;
- Fig. 14A, 14B, 14C und 14D: zeigen schematisch eine Verfahrensvariante mit der Schrittfolge Kerben-Kerben-Abscheren, wobei für alle Teilschritte an gegenüberliegenden Seiten des Drahts jeweils ein Kombinationswerkzeug mit drei unterschiedlich ausgestalteten Funktionsabschnitten für die Funktionen (i) Kerben in einer ersten Richtung, (ii) Kerben in einer zur ersten Richtung senkrechten zweiten Richtung und (iii) Scherschneiden verwendet wird.

### DETAILLIERTE BESCHREIBUNG DER AUSFÜHRUNGSBEISPIELE

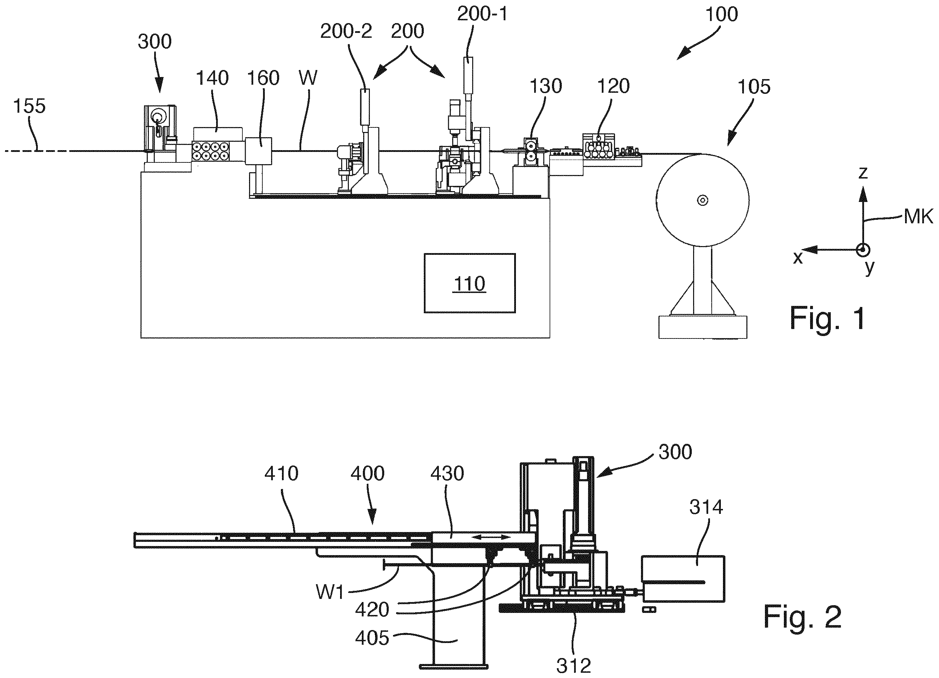

Fig. 1 zeigt eine Seitenansicht einer insgesamt als Stabkonfektioniermaschine ausgelegten Drahtverarbeitungsmaschine 100 gemäß einem Ausführungsbeispiel. Die Drahtverarbeitungsmaschine ist zur Herstellung konfektionierter Formteile in Form von geraden Drahtstäben eingerichtet. Die Drahtverarbeitungsmaschine hat ein mit Kleinbuchstaben x, y und z gekennzeichnetes, rechtwinkliges Maschinenkoordinatensystem MK mit einer vertikalen z-Achse und horizontalen x- und y-Achsen. Im dargestellten Beispiel verläuft die x-Achse parallel zu einer Durchlaufrichtung, in der Drahtmaterial hindurchläuft. Von den Koordinatenachsen des Maschinenkoordinatensystems sind die geregelt angetriebenen Maschinenachsen zu unterscheiden, die üblicherweise mit Großbuchstaben (zum Beispiel A-Achse etc.) bezeichnet werden. Eine Steuerungseinheit 110 der Drahtverarbeitungsmaschine steuert und koordiniert die Arbeitsbewegungen aller Maschinenachsen.

Das drahtförmige Ausgangsmaterial W liegt in Form eines gewickelten Materialvorrats (coil) vor, der im Beispielsfall auf einer Haspel 105 aufgewickelt ist. Das Ausgangsmaterial liegt in Form von elektrisch isoliertem Flachmaterial vor, das ein elektrisch leitendes Trägermaterial aufweist, welches von einer elektrisch isolierenden Isolationsschicht umhüllt ist. Der Begriff "Flachmaterial" bezeichnet hier im allgemeinen Werkstücke, deren elektrisch leitendes Trägermaterial paarweise parallel zueinander ausgerichtete Seitenflächen aufweist. Das Trägermaterial kann z.B. einen Rechteckquerschnitt mit relativ scharfen oder leicht oder komplett gerundeten und/oder mit einer Fase versehenen Kanten aufweisen. Flachmaterialien in Form von isolierten Kupfer- oder Aluminiumdrähten mit Rechteckquerschnitt können zum Beispiel zum Herstellen von Spulenelementen für Elektromotoren oder zum Herstellen von Stromschienen verwendet werden.

Nach Verlassen der Haspel 105 tritt das Flachmaterial mehr oder weniger koaxial zur Durchlaufachse 155 in eine nachgeschaltete Baugruppe ein. Diese umfasst in dieser Reihenfolge entlang der Durchlaufachse 155 des Werkstücks eine Richteinrichtung 120, eine Längenmesseinrichtung 130, eine Abisoliereinrichtung 200, eine der Abisoliereinrichtung nachgeschaltete Bürsteinrichtung 160, eine der Bürsteinrichtung nachgeschaltete Einzugseinrichtung 140 und eine der Einzugseinrichtung nachgeschaltete Trenneinrichtung 300.

Die Richteinrichtung 120 hat zwei hintereinandergeschaltete Richtapparate mit Richtrollen, die das durchtretende Werkstück nacheinander in zwei zueinander senkrechten Richtungen bearbeiten und dadurch richten.

Die optionale Längenmesseinrichtung 130 hat ein Messrad und ein gegenüberliegendes Laufrad und erlaubt eine exakte Messung der zu den nachfolgenden Einheiten geförderten Werkstücklänge.

Die integrierte Abisoliereinrichtung 200 dient zum Abisolieren von Abschnitten des isolierten Flachmaterials vor Abtrennen des Formteils von dem zugeführten Flachmaterial. Die Fräseinrichtung 200 umfasst zwei axial zueinander versetzt angeordnete Teileinheiten, nämlich eine erste Teileinheit 200-1, die unmittelbar der Längenmesseinrichtung 130 nachgeschaltet ist, und eine zweite Teileinheit 200-2, die mit axialem Abstand hinter der ersten Teileinheit angeordnet ist. Jede der Teileinheiten ist dafür ausgelegt, in einer Fräsoperation zeitgleich zwei einander gegenüberliegende Seitenflächen des Flachmaterials mittels Umfangsfräsen abzuisolieren. Jede der Teileinheiten weist zwei Fräseinheiten auf, deren Frässpindeln achsparallel und achsversetzt zueinander so angeordnet sind, dass die Rotationsachsen der Frässpindeln parallel versetzt zueinander liegen und die in den Frässpindeln aufgenommenen Fräswerkzeuge um zueinander parallel versetzte Rotationsachsen gedreht werden können. Bei der ersten Teileinheit 200-1 sind die Rotationsachsen der beiden Fräseinheiten vertikal, also parallel zur z-Richtung des Maschinenkoordinatensystems, ausgerichtet, so dass die in einer Horizontalebene gegenüberliegenden Seitenflächen des Flachmaterials gleichzeitig abisoliert werden können. Bei der nachfolgenden zweiten Teileinheit 200-2 sind die Rotationsachsen der Fräseinheiten horizontal, also parallel zur y-Achse des Maschinenkoordinatensystems, ausgerichtet, um zeitgleich die vertikal übereinanderliegende Ober- und Unterseite des durchlaufenden Flachmaterials abzuisolieren. Die Fräseinheiten der mit Abstand hintereinander angeordneten Teileinheiten sind also um 90° zueinander versetzt montiert.

Bei anderen Ausführungsformen arbeitet die Abisoliereinrichtung nach einem anderen Prinzip, z.B. mithilfe von Laserbearbeitung oder mittels einer Schäloperation mittels Messern mit gerader Schneidkante, die in einer Arbeitsstellung des Messers derart in der Nähe einer freizulegenden Seitenfläche des Trägermaterials angeordnet wird, dass ein von dem Messer erfasster Teil der Isolationsschicht bei Fortbewegung des Flachmaterials relativ zu dem Messer von dem Trägermaterial entfernt wird (vgl. DE 10 2017 200 745 A1).

Eine Abisoliereinrichtung kann auch entfallen, z.B. wenn das zu verarbeitende Ausgangsmaterial blank, also nicht von einer Isolationsschicht umhüllt ist. Gleiches gilt ggf. für die Bürsteinrichtung 160.

Die Vorschubbewegung wird mithilfe der hinter der Abisoliereinrichtung 120 angeordneten Einzugseinrichtung 140 erzeugt, die das Werkstück mit über die Steuerung vorgebbarem Einzugsprofil durch die vorgeschalteten Einrichtungen hindurchzieht und zur nachgeschalteten Trenneinrichtung 300 fördert. Die Vorschubkraft in Einzugsrichtung (x-Richtung) entsteht dabei durch Reibung zwischen Einzugswalzen oder Einzugsriemen der Einzugseinrichtung und dem Flachmaterial. Alternativ kann z.B. ein Zangeneinzug vorgesehen sein.

Die Trenneinrichtung 300 ist der Einzugseinrichtung 140 unmittelbar nachgeschaltet, innerhalb der Abisoliereinrichtung 120 findet keine biegende Umformung des Flachmaterials statt, so dass die Trenneinrichtung gerade Formteile vorgebbarer Länge, also Drahtstäbe, vom zugeführten abisolierten Flachmaterial abtrennt. Die Trenneinrichtung und Varianten davon werden weiter unten detailliert beschrieben.

Nach dem Abtrennen vom zugeführten Drahtmaterial können die Drahtstäbe beispielsweise in einer nicht dargestellten Sammeleinrichtung gesammelt und einer Weiterverarbeitung zugeführt werden. Bei dem Ausführungsbeispiel ist der Trenneinrichtung 300 eine Transporteinrichtung 400 nachgeschaltet, die in Fig. 2 schematisch dargestellt ist. Diese dient dem individuellen Weitertransport bzw. der Übergabe der abgetrennten Drahtstäbe zu einer nachgeschalteten Weiterverarbeitungsmaschine und wird hier auch als "Stabübergabeeinrichtung" oder abgekürzt als "Stabübergabe" bezeichnet. Die Transporteinrichtung 400 hat eine von einer Konsole 405 getragene horizontale Linearführung 410, an der ein Transportgreifer 420 linear beweglich geführt ist. Die Greiforgane des Transportgreifers sind an einem mit Servomotor ausgestatteten Schlitten 430 montiert, der entlang der Linearführung 410 laufen kann.

In Fig. 2 greift der hängend angeordnete Transportgreifer einen abzutrennenden Drahtstab W1 vor Beginn der Trennoperation von oben, hält ihn während der Trennoperation in horizontaler Ausrichtung und transportiert den abgetrennten Drahtstab nach Anschluss der Trennoperation nach links zur Weitergabe, bevor er horizontal zurück hinter die Trenneinrichtung fährt, um einen neuen Drahtstab zu greifen.

In der gezeigten Konfiguration ist der Transportgreifer 420 während der Trennoperation kraft- und momentenreduziert geschaltet, so dass der Transportgreifer 420 eventuellen Längenausgleichsbewegungen des abzutrennenden Drahtabschnitts während des Trennens horizontal schwimmend folgen kann.

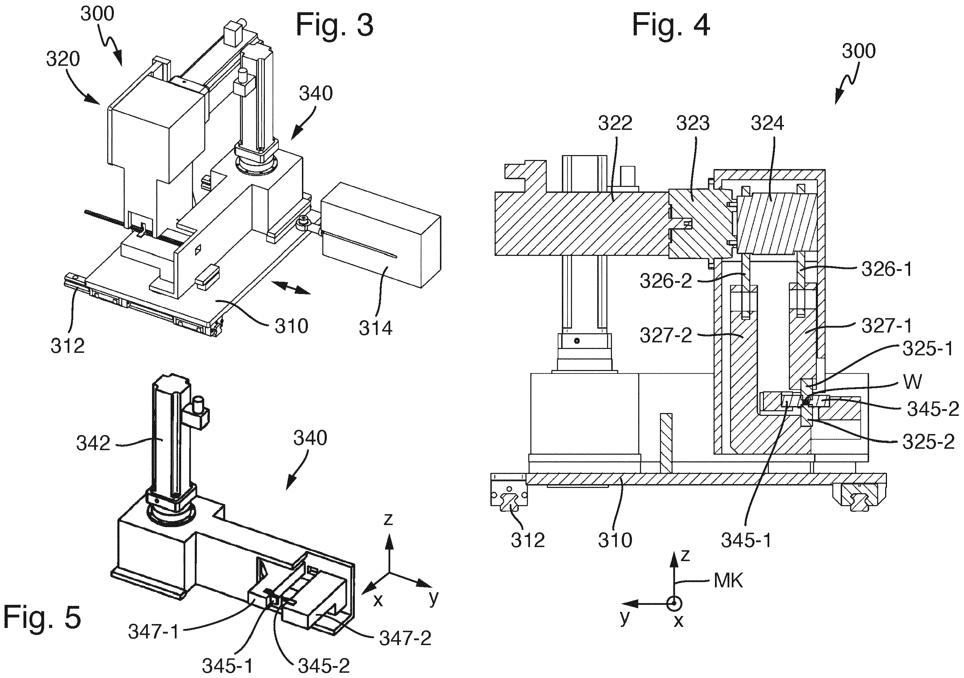

Nachfolgend werden der Aufbau und die Funktion der Trenneinrichtung 300 anhand der Fig. 3 bis 5 näher erläutert. Fig. 3 zeigt eine isometrische Ansicht mit Komponenten der Trenneinrichtung 300, Fig. 4 zeigt einen senkrechten Schnitt durch die Trenneinrichtung 300 in derjenigen Ebene (Trennebene), in welcher die Kerbwerkzeuge und die keilförmigen Schneiden einer Schnitteinrichtung wirken, und Fig. 5 zeigt eine Teilansicht von Komponenten der Schnitteinrichtung.

Die Trenneinrichtung 300 dient zum Abtrennen von Formteilen vorgegebener Drahtlänge von dem zugeführten Drahtmaterial an einer Trennposition, die für die Trennung vorgegeben werden kann. Der Begriff "Trennposition" beschreibt eine definierte Position entlang des Drahts, also eine bestimmte Stelle entlang des Drahts. Die Trenneinrichtung 300 umfasst eine Kerbeinrichtung 320, von der einige Komponenten in Fig. 4 gezeigt sind, sowie eine koordiniert mit der Kerbeinrichtung betätigbare Zerteilungseinrichtung in Form einer Schnitteinrichtung 340, deren Komponenten in Fig. 5 nochmals in Alleinstellung gezeigt sind.

Diese Komponenten der Trenneinrichtung 300 sind in ihrer Gesamtheit in Horizontalrichtung parallel zur Durchlaufachse 155 des Drahts schwimmend gelagert. Hierzu sind die Komponenten auf einer Basisplatte 310 montiert, die linear verschiebbar auf Linearführungen 312 in Form von Rollenumlaufführungen geführt ist. An der der Richteinheit 140 zugewandten Seite ist ein Servomotor 314 montiert, der eine an der Basisplatte angelenkte Zugstange axial bewegen kann. Damit kann die Trenneinrichtung 300 als Ganzes nach einer erfolgten Schwimmbewegung nach vorne motorisch zurückgeholt werden. Der Servomotor kann auch dazu genutzt werden, während des Trennvorgangs die Trenneinrichtung aktiv zu bewegen, falls die schwimmende Lagerung nicht ausreicht, um die resultierende Kräfte in Längsrichtung ausgleichen zu können. Der Servomotor kann somit auch zur axialen Positionierung der gesamten Trenneinrichtung 300 in x-Richtung (parallel zur Durchlaufachse 155) genutzt werden.

Die Kerbeinrichtung 320, deren Komponenten in Fig. 4 im vertikalen Schnitt erkennbar sind, ist so konstruiert, dass Drahtmaterial an der gewünschten Trennposition mithilfe einer Kerboperation von zwei einander gegenüberliegenden Seiten mithilfe von Kerbwerkzeugen 325-1, 325-2 durch Umformen, also ohne Materialabtrag, eingekerbt werden kann. Die Kerboperation wird dabei so gesteuert, dass an der Trennposition zwischen den gegenüberliegenden Kerben ein verjüngter Drahtquerschnitt verbleibt. Die Kerbwerkzeuge sind hierzu gegenparallel entlang einer vertikalen ersten Richtung (parallel zur z-Achse) symmetrisch zur Durchlaufachse 155 koordiniert zustellbar. Hierzu hat die Kerbeinrichtung einen servomotorischen Antrieb 322, der über ein Getriebe 323 eine mit horizontaler Achse gelagerte Kurbelwelle 324 drehend antreibt. Auf der Kurbelwelle sind ein erstes Pleuel 326-1 und ein zweites Pleuel 326-2 an entsprechenden exzentrischen Abschnitten der Kurbelwelle drehbar gelagert. Das erste Pleuel ist an einem ersten Schieber 327-1 angekoppelt, der mithilfe der Kurbelwelle über das Pleuel in der vertikalen ersten Richtung nach oben und unten linear verschiebbar ist. An der dem Werkstück zugewandten Stirnseite des ersten Schiebers 327-1 ist eine Aufnahme für das erste Kerbwerkzeug 325-1, das dementsprechend von oben in das Werkstück eindringt. Das zweite Pleuel 326-2 treibt einen L-förmig gestalteten zweiten Schieber 327-2 an, der auch parallel zur ersten Richtung nach oben und unten verschiebbar ist und an seinem vorderen Ende eine Werkzeugaufnahme für das zweite Kerbwerkzeug 325-2 aufweist. Damit können über den Servoantrieb 322 beide Kerbwerkzeuge gleichzeitig in gegenläufige Richtungen auf das Werkstück zu oder vom Werkstück weg zugestellt werden. Der Hub der Pleuel bzw. der Schieber ist dabei so eingestellt, dass die Kerbwerkzeuge im Werkstück Kerben erzeugen, ohne das Werkstück an der Trennposition vollständig zu durchtrennen. Vielmehr bleiben an gegenüberliegenden Seiten jeweils Kerben, zwischen denen eine "Steg" aus Drahtmaterial mit verjüngtem Drahtquerschnitt verbleibt.

Die als Zerteilungseinrichtung fungierende Schnitteinrichtung 340 ist ähnlich aufgebaut. Sie umfasst einen Schnittantrieb 342 in Form eines Servomotors, der über ein Getriebe eine mit horizontaler Achse gelagerte Kurbelwelle antreibt, die über zwei Pleuel einen horizontal linear verschiebbaren ersten Schieber 347-1 und einen parallel dazu linear verschiebbaren zweiten Schieber 347-2 synchron mit gegenläufigen Zustellrichtungen antreibt. Die Schieber tragen jeweils an ihren Enden Werkzeugaufnahmen, in denen ein erstes Schnittwerkzeug 345-1 mit einer keilförmigen Schneide und gegenüberliegend am zweiten Schieber ein zweites Schnittwerkzeug 345-2 mit einer keilförmigen Schneide angebracht ist. Über Ansteuerung des Antriebs 342 können die beiden keilförmigen Schneiden zur Durchführung einer Schnittoperation relativ zueinander symmetrisch zur Durchlaufachse 155 parallel zu einer zweiten Richtung (y-Richtung) aufeinander zu oder voneinander weg bewegt werden. Mithilfe der Schnittwerkzeuge mit keilförmigen Schneiden kann das eingekerbte Drahtmaterial im Bereich des verjüngten Drahtquerschnitts an der Trennposition durch Beißschneiden getrennt werden, indem die keilförmigen Schneiden bei der Schnittoperation relativ zueinander so weit aufeinander zubewegt werden, bis das Drahtmaterial an der Trennposition durchtrennt ist.

Die dem Werkstück (Draht) zugewandten wirksamen Schneiden der Kerbwerkzeuge und die Schneidkanten der keilförmigen Schneiden der Schnittwerkzeuge sind in derselben, senkrecht zur Durchlaufrichtung orientierten Ebene (Trennebene, Zeichnungsebene in Fig. 4) angeordnet. Die Arbeitsbewegungen der Kerbwerkzeuge und der Schnittwerkzeuge werden mithilfe ihrer zugeordneten Antriebe 322, 342 über die Steuerung 110 der Drahtverarbeitungsmaschine so koordiniert, dass die Kerbwerkzeuge erst dann in das Werkstück eingreifen können, wenn die Schneidwerkzeuge in ihre zurückgezogene Position nach außen zurückgefahren sind, so dass eine Kollision zwischen Kerbwerkzeugen und Schnittwerkzeugen ausgeschlossen ist. Für die Schnittoperation werden dann die Kerbwerkzeuge in ihre zurückgezogene Position vom Werkstück wegbewegt, bevor die Schnittwerkzeuge das Drahtmaterial des Werkstücks im Bereich des verjüngten Drahtquerschnitts durch Beißschneiden durchtrennen.

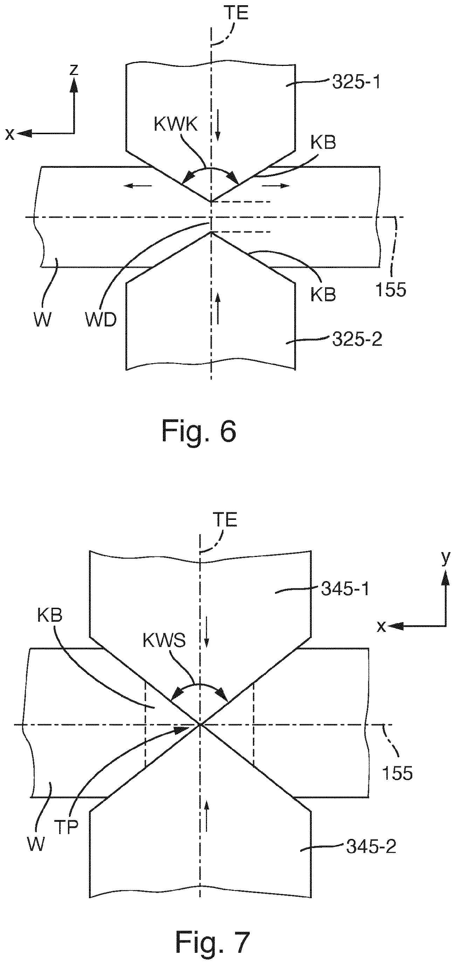

In den Fig. 6 und 7 sind schematisch die Kerboperation (Fig. 6) und die Schnittoperation (Fig. 7) dargestellt. Bei der Kerboperation (Fig. 6) werden Kerbwerkzeuge 325-1, 325-2 in Form dachförmiger Kerbkeile mit scharfem oder leicht abgerundetem Spitzenbereich verwendet. Der Keilwinkel KWK zwischen den Keilflächen ist ein stumpfer Winkel und beträgt im Beispielsfall etwas mehr als 100°, beispielsweise 120°. Die Kerboperation ist eine reine Umformoperation ohne jeglichen Materialabtrag. Beim gegenparallelen Eindringen der Kerbwerkzeuge in das Drahtmaterial wird Material im Wesentlichen in Längsrichtung des Drahts verdrängt, ohne dass Materialabtrag erfolgt. Diese Materialverdrängung in Axialrichtung führt jedoch nicht zu einer Verbiegung des Drahtmaterials, da die Trenneinrichtung 300 schwimmend gelagert ist und axiale Ausgleichsbewegungen ausführen kann. Im Bereich zwischen den Kerben bleibt ein verjüngter Drahtabschnitt WD, in dem das Drahtmaterial aufgrund der Kerboperation gegenüber unverformtem Drahtmaterial verfestigt ist.

Nach Zurückziehen der Kerbwerkzeuge werden die Schnittwerkzeuge 345-1, 345-2 in Richtung des bereits eingekerbten Materials, also an den gegenüberliegenden Kerben KB, parallel zur zweiten Richtung, also orthogonal zu der Einwirkrichtung der Kerbwerkzeuge, synchron zugestellt. Fig. 7 zeigt eine Situation, bei der sich die einander zugewandten, in einer Ebene liegenden Schneidkanten der Schnittwerkzeuge berühren oder nahezu berühren in der Weise, dass das Drahtmaterial durch Beißschneiden an der in der Trennebene liegenden Trennposition TP durchtrennt wird. Es ist ersichtlich, dass das Beißschneiden im Bereich des bereits gekerbten Materials an der Trennposition dort erfolgt, wo das Drahtmaterial durch die vorgelagerte Kerboperation schon stark verfestigt ist. Dies führt bei der Schnittoperation zu einer sehr glatten und wohldefinierten Bruchfläche.

Außerdem sorgen die Keilflächen der Kerbwerkzeuge und die Keilflächen der Schnittwerkzeuge dafür, dass an den Drahtenden der entstehenden Formteile jeweils klar definierte Fasen in Form von schrägen, mehr oder weniger trapezförmigen Planflächen entstehen. Der Keilwinkel KWS zwischen den Keilflächen der Schnittwerkzeuge entspricht bei manchen Varianten dem Keilwinkel KWK der Kerbwerkzeuge, so dass die Schrägflächen sowohl an den Breitseiten des Flachmaterials (diese werden im Beispielsfall durch die Kerbwerkzeuge gestaltet) als auch die Fasen bzw. Planflächen an den Schmalseiten des Flachmaterials (diese werden im Beispielsfall durch die Schnittwerkzeuge gestaltet) um den gleichen Winkel gegenüber der ursprünglichen Orientierung der Seitenflächen angestellt sind. Es ist auch möglich, dass sich die Keilwinkel der Schnittwerkzeuge und der Kerbwerkzeuge unterscheiden.

Abweichend von der gezeigten Konstruktion kann die relative Anordnung von Kerbeinrichtung und Schnitteinrichtung auch umgekehrt sein, so dass z.B. Fig. 4 die Komponenten einer Schnitteinrichtung (für vertikalen Schnitt) und Fig. 5 die Komponenten einer Kerbeinrichtung (für horizontales Kerben) zeigt.

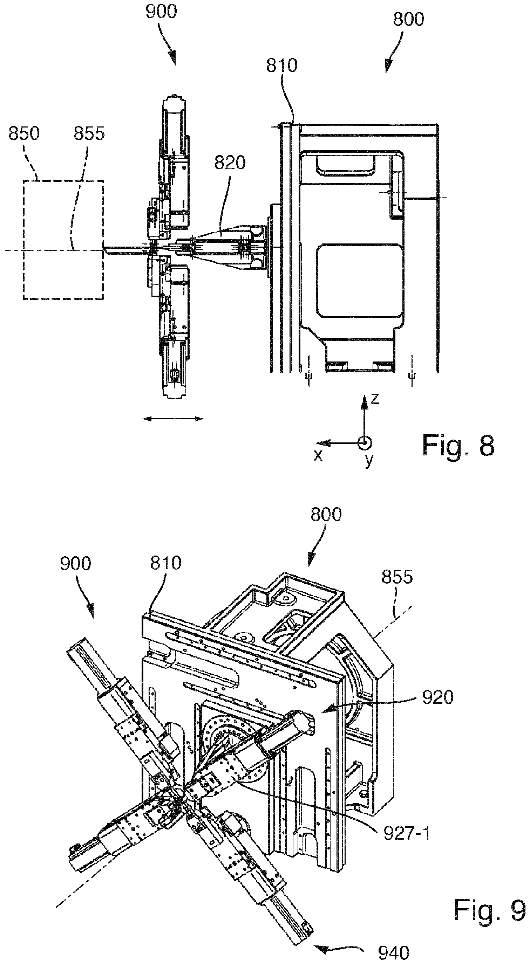

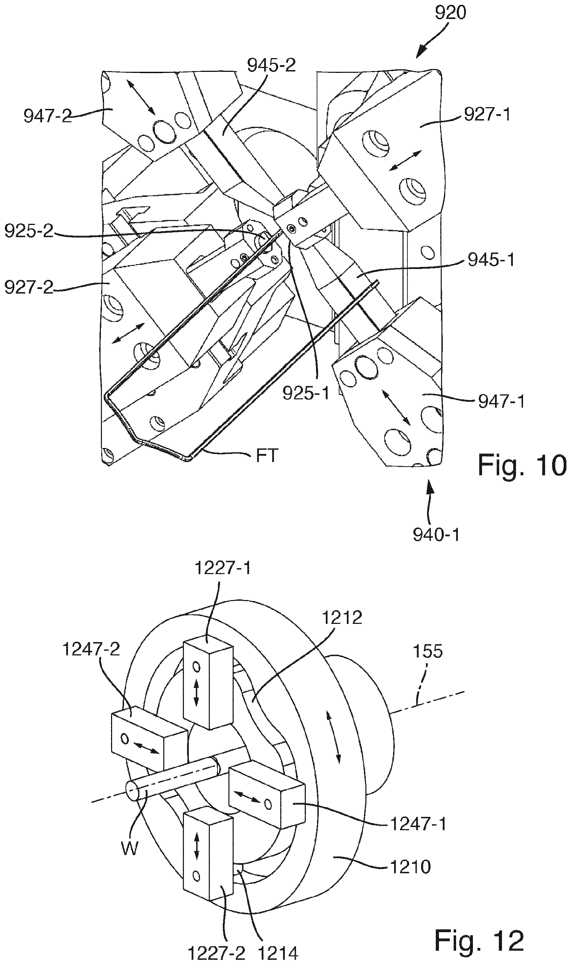

Anhand der Fig. 8 bis 10 wird ein weiteres Ausführungsbeispiel einer Drahtverarbeitungsmaschine mit zweistufiger Trenneinrichtung (Kerben und Beißschneiden) erläutert. Die Drahtverarbeitungsmaschine 800 ist eine Biegemaschine 800 zur Herstellung von konfektionierten Biegeteilen, also von konfektionierten Formteilen, die zwischen den Drahtenden eine oder mehrere Biegungen aufweisen. Die Biegemaschine 800 ist im Beispielsfall so aufgebaut und programmiert, dass damit konfektionierte Biegeteile FT in Form von U-förmig gebogenen Spulenelementen, sogenannte Hairpins, zum Aufbau von Elektromotoren gebogen werden können (vgl. Fig. 10).

Die Biegemaschine hat ein Maschinengestell mit einer vertikalen Vorderwand 810, in der eine Drahtführung 820 eingebaut ist, die den zugeführten Draht entlang einer Durchlaufachse 855 führt. In dem gekapselten Bereich hinter der Maschinenvorderwand 810 gibt es unter anderem eine Richteinheit und eine Einzugseinrichtung, mit der der Draht von einem Endlosvorrat abgezogen und gerichtet durch eine Drahtführung 820 hindurch vorgeschoben wird. Die Drahtführung und die damit drehfest gekoppelten vorgeschalteten Einrichtungen (Einzugsrichtung und Richteinheit) sind gesteuert um die Durchlaufachse 855 drehbar. In einer vertikalen Ebene hinter der Drahtführung sind Komponenten einer Trenneinrichtung 900 angeordnet. Auf der der Maschinenwand abgewandten Austrittsseite der Trenneinrichtung befindet sich die hier nicht im Detail dargestellte Biegeeinheit 850 mit einem oder mehreren Biegewerkzeugen zur Erzeugung der vorgesehenen Biegungen in dem Drahtmaterial. Während des Fertigungsprozesses wird das Drahtmaterial in Richtung der Biegeeinheit 850 nach vorne gefördert und dort einfach oder mehrfach in einer oder mehreren zueinander versetzt liegenden Biegeebenen gebogen, um die gewünschte Biegegeometrie des Formteils zu erhalten. Danach wird das fertige Formteil mithilfe der Trenneinrichtung 900 vom zugeführten Drahtvorrat abgetrennt.

Die Trenneinrichtung 900 ist als Ganzes parallel zur x-Richtung des Maschinenkoordinatensystems bzw. parallel zur Durchlaufachse 855 schwimmend gelagert, um bei Bedarf Ausgleichsbewegungen der Längenausdehnung am gefertigten Formteil während der Kerb- und Schneidoperationen zu erlauben. Es kann auch ein Servomotor angekoppelt sein, der (ähnlich dem Servomotor 314 aus Fig. 2) dazu genutzt werden kann, während des Trennvorgangs die Trenneinrichtung 900 aktiv parallel zur Durchlaufachse 855 zu bewegen, falls die schwimmende Lagerung nicht ausreicht, um die resultierende Kräfte in Längsrichtung ausgleichen zu können.

Die Trenneinrichtung 900 umfasst eine Kerbeinrichtung 920 und eine Schnitteinrichtung 940, die insgesamt eine kreuzförmige Anordnung mit vier Teileinheiten bilden. Die Kerbeinrichtung 920 umfasst einen linear verschiebbar gelagerten ersten Schieber 927-1, der mithilfe eines angeflanschten Servoantriebs über ein zwischengeschaltetes Getriebe mit einem Kugelgewindetrieb in einer ersten Richtung radial zur Durchlaufachse 855 des Materials vor und zurück verfahren werden kann. Am werkzeugzugewandten Ende des Schiebers befindet sich eine Werkzeugaufnahme zur Aufnahme eines ersten Kerbwerkzeugs 925-1. Diametral gegenüberliegend ist ein zweiter Schieber 927-2 montiert, der über einen eigenen Servoantrieb ein zweites Kerbwerkzeug 925-2 gegenparallel zum ersten Kerbwerkzeug in Richtung des Werkstücks oder in Gegenrichtung (parallel zur ersten Richtung) zustellen kann. Die erste Richtung ist in einer zur Durchlaufachse senkrechten y-z-Ebene um 45° gegenüber der y- und der z-Richtung schräggestellt.

Die beiden Teileinheiten der Schnitteinrichtung 940 sind um 90° umfangsversetzt zu den entsprechenden Einheiten der Kerbeinrichtung angeordnet. Dabei trägt ein erster Schieber 947-1 der Schnitteinrichtung ein erstes Schnittwerkzeug 945-1 mit einer keilförmigen Schneide und gegenüberliegend ein zweiter Schieber 947-2 das zweite Schnittwerkzeug 945-2 mit keilförmiger Schneide. Die Anordnung der Werkzeuge ist besonders gut in Fig. 10 zu erkennen.

Die Schieber sind jeweils auf plattenförmigen Trägern montiert, die sowohl parallel zur z-Richtung als auch parallel zur y-Richtung verfahrbar sind, so dass die von den Schiebern getragenen Werkzeuge und die Arbeitsrichtung der Werkzeuge auf die jeweilige Werkstückgeometrie abgestimmt werden können.

Bei dieser Ausführungsform ist für jedes der Werkzeuge (jedes der beiden Kerbwerkzeuge und jedes der beiden Schnittwerkzeuge) ein eigener Servoantrieb vorgesehen. Die Servoantriebe werden über die Steuereinheit der Drahtverarbeitungsmaschine so koordiniert, dass in derselben Ebene (Trennebene) dort, wo die Trennposition des Drahts liegt, zunächst die Kerbwerkzeuge gegenparallel zugestellt werden, um die gegenüberliegenden Kerben zu erzeugen, danach die Kerbwerkzeuge radial zurückgezogen werden, und danach in der zur ersten Richtung senkrechten zweiten Richtung die Schneidwerkzeuge mit den keilförmigen Schneiden radial soweit nach innen zugestellt werden, bis das Drahtmaterial durch Beißschneiden im Bereich des verjüngten Drahtstegs durchtrennt ist.

Abweichend von der Darstellung in Fig. 8 gibt es auch Ausführungsbeispiele, bei denen die Komponenten der Trenneinrichtung und die für die Biegungserzeugung genutzten Komponenten der Biegeeinheit in einer gemeinsamen Ebene liegen. Schieber und Werkzeuge der Biegeeinheit können z.B. jeweils in Umfangsrichtung zwischen den unter 45° zur Horizontalen geneigten Einheiten der Kerbeinrichtung 920 und der Schnitteinrichtung 940 in Fig. 9 liegen. Sie können eine kreuzförmige Anordnung mit horizontal und vertikal ausgerichteten Einheiten bilden.

Es hat sich in vielen Versuchen gezeigt, dass die zweistufige Trennoperation mit vorausgehendem Einkerben durch Umformung und nachfolgendem Durchtrennen im verjüngten Drahtabschnitt mittels Beißschneiden bei der Herstellung von konfektionierten Formteilen zu sehr gut geometrisch definierten Drahtenden führt. Zur Illustration wurden Vergleichsversuche durchgeführt, bei denen einerseits die Durchtrennung im erfindungsgemäßen zweistufigen Verfahren durchgeführt wurde und andererseits, zum Vergleich, durch eine einmalige Beißschneidoperation ohne vorheriges Einkerben.

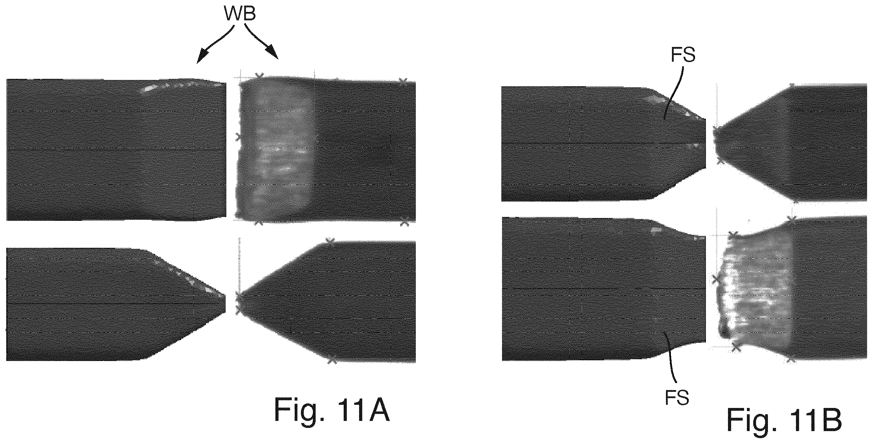

Zur Erläuterung zeigt Fig. 11A Ansichten eines Drahtendes eines Flachdrahts mit Rechteckquerschnitt einerseits von der Breitseite (obere Teilfiguren) und andererseits von der Schmalseite (untere Teilfiguren). Links ist jeweils das Ergebnis einer Finite-Elemente-(FEM)-Simulation gezeigt, spiegelbildlich rechts dazu die photographische Abbildung eines Drahtendes gemäß Experiment. Es wurden zahlreiche Versuche durchgeführt. Aufgrund der guten Übereinstimmung zwischen Simulation und Experiment wird davon ausgegangen, dass die Ergebnisse repräsentativ und signifikant sind.

Bei der Beißschneidoperation ohne vorgelagertes Kerben (Fig. 11A) ergibt sich bei der Erzeugung von Kerben an gegenüberliegenden Breitseiten des Materials an den Schmalseiten eine deutliche Querschnittsverbreiterung in Form einer nach außen gerichteten Wölbung WB des Materials. In diesem Bereich wird Material durch Materialverdrängung nach außen über die Hüllkontur des ursprünglichen, unbearbeiteten Drahtmaterials hinaus verdrängt. Abgesehen davon entspricht die erzeugte Geometrie der gewünschten Geometrie mit im Wesentlichen ebenen schräggestellten Fasen an den Breitseiten der Drahtenden.

Im Vergleich dazu zeigt Fig. 11B die Ergebnisse bei Durchführung einer Schnittoperation mit vorgelagerter Kerboperation. Wie aus den unteren beiden Teilfiguren ersichtlich ist, ergibt sich auch an den Schmalseiten des Drahtmaterials eine deutliche Querschnittsverjüngung in Form einer leicht nach innen gewölbten, ansonsten mehr oder weniger ebenen Fase FS. Das auf diese Weise erzeugte Drahtende ist somit sowohl an den Breitseiten als auch an den Schmalseiten mit nach innen gerichteten Fasen FS versehen, so dass im Endbereich kein Material über die Hüllkontur des Ausgangsmaterials hinausragt.

Das Antriebskonzept der oben gezeigten Ausführungsbeispiele ist nur beispielhaft. Es gibt auch andere Möglichkeiten zur Betätigung der Kerbwerkzeuge und der Schnittwerkzeuge.

Die schematische Fig. 12 zeigt beispielhaft Komponenten eines Antriebskonzepts, das mit einem einzigen Antrieb für die Kerbwerkzeuge und die Schnittwerkzeuge auskommt. Der nicht dargestellte Antrieb treibt eine Kurvenscheibe 1210 an, die um eine parallel bzw. koaxial zur Durchlaufachse 155 verlaufende Drehachse mithilfe des Antriebs drehbar ist. Die Kurvenscheibe ist mit einer Kurvenbahn ausgestattet, die im Beispielsfall in Form einer umlaufenden Nut 1212 eingebracht ist oder sich auch auf der Außenseite oder Innenseite der Kurvenscheibe befinden kann. Der Verlauf der Kurvenbahn wird über Rollen 1214 abgenommen, die im Beispielsfall an vertikal verschiebbaren ersten Schiebern 1227-1, 1227-2 und horizontal verschiebbaren zweiten Schiebern 1047-1, 1047-2 angebracht sind. Die radial zur Durchlaufachse 155 linear verschiebbar geführten Schieber tragen, ähnlich wie beim ersten Ausführungsbeispiel, an ihrer dem Werkstück zugewandten Innenseite die Werkzeugaufnahmen für die Kerbwerkzeuge bzw. Schnittwerkzeuge.

Eine Rückstellung der Schieberbewegung kann je nach Bauform entweder zwangsläufig über die Geometrie der Nut 1212 oder über eine Rückstellkraft einer Feder erfolgen, die die Rolle bzw. das mit der Rolle gekoppelte Element an die Kurvenbahn andrückt. Bei diesem Konzept wird sowohl die vertikale Kerbbewegung als auch die horizontale Schnittbewegung mit einer einzigen Kurvenscheibe 1210 gesteuert. Die Kurvenscheibe kann ausgewechselt werden, um andere Kinematiken zu realisieren. Über eine Kurvengeometrie können sehr hohe Kräfte erzeugt werden, was für die Umformvorgänge vor allem beim Kerben, aber auch beim Beißschneiden, von Vorteil ist. Die Kurvenscheibe im Beispielsfall läuft nicht unbegrenzt um, sondern wird in einem Bereich von maximal 90° reversierend bewegt (siehe Doppelpfeil). Die Einstellung der Kerbtiefe erfolgt über den Drehwinkel der Kurvenscheibe. Je weiter der maximale Schwenkbereich von 90° ausgereizt wird, desto tiefer werden die Kerben jeweils eingeprägt. Das Konzept der Kurvenscheibe ist eine kompakte Lösung, bei der zwei Bewegungen (für Kerbwerkzeuge und Schnittwerkzeuge) auf kleinem Raum realisiert werden können. Es ergibt sich eine gute und variable Kraftübersetzung bei Einsatz einer Kurve mit unterschiedlichen Steigungen.

Es sind auch Ausführungsformen möglich, bei denen nur zwei Servoantriebe mit keilförmigen Werkzeugen vorgesehen sind, welche sowohl für Kerben als auch für Schneiden genutzt werden. Dazu kann z.B. der Draht zwischen Kerben und Schneiden um 90° gedreht werden.

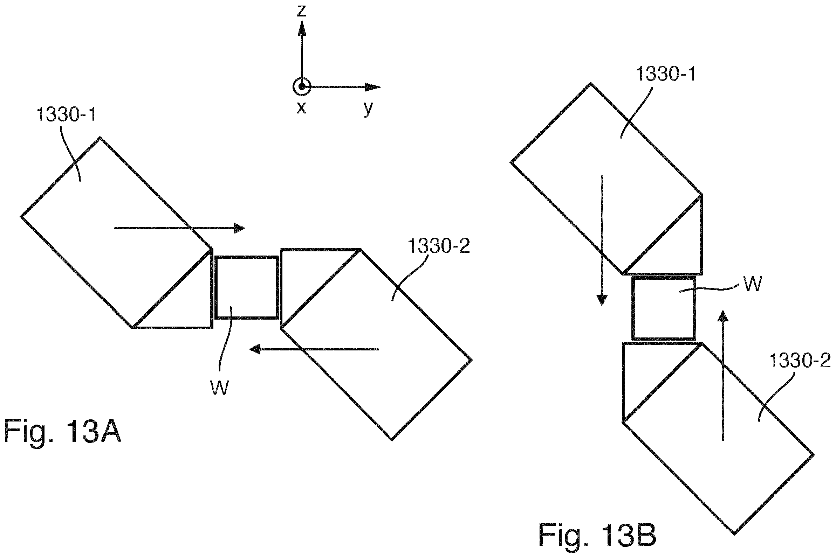

Es ist auch möglich, die keilförmigen Werkzeuge in der Art auszubilden bzw. zu gestalten, dass durch entsprechendes Verfahren in z- und y-Richtung an dem Draht W einerseits eine Kerboperation und andererseits - in derselben Ebene - eine Schnittoperation in einer dazu senkrechten Richtung möglich ist. Fig. 13A zeigt dazu eine Kerboperation mit zwei jeweils am freien Ende dreieckförmigen Werkzeugen 1330-1, 1330-2, die jeweils zwei in 90° zueinander verlaufende, jeweils keilförmige Schneiden aufweisen. Die Kerben werden an zwei in y-Richtung einander gegenüberliegenden ebenen Seiten des im Querschnitt rechteckigen Drahts eingebracht. Fig. 13B zeigt eine Schnittoperation mit denselben, am freien Ende dreieckförmigen Werkzeugen, wobei jetzt die um 90° versetzt verlaufenden keilförmigen Schneiden verwendet werden. Die Zustellrichtung für die Schnittoperation verläuft parallel zur z-Richtung. Die Werkzeuge fungieren also sowohl als Kerbwerkzeuge als auch als Schnittwerkzeuge. Sie haben für jede der Operationen eine keilförmige Schneide, wobei die Schneidkanten dieser Schneiden zueinander senkrecht verlaufen.

Die Trenneinrichtung dieses Ausführungsbeispiels hat eine Kerbeinrichtung und eine zeitlich nach der Kerbeinrichtung betätigbare Schnitteinrichtung, die dieselben Komponenten teilen, so dass die Kerbeinrichtung auch als Schnitteinrichtung genutzt wird. Die Kerbeinrichtung und die Schnitteinrichtung müssen also keine voneinander gesonderten Einrichtungen sein, sie können integriert sein.

Die Werkzeuge 1330-1, 1330-2 in Fig. 13 sind Beispiele für Kombinationswerkzeuge, die ein integriertes Kerbwerkzeug und ein integriertes Beißschneidwerkzeug mit orthogonal zueinander verlaufenden geraden Schneidkanten aufweisen. In Fig. 13A sind die Kerbwerkzeuge in synchronem Eingriff mit dem Werkstück, in Fig. 13B die Schnittwerkzeuge mit den symmetrischkeilförmigen Schneiden.

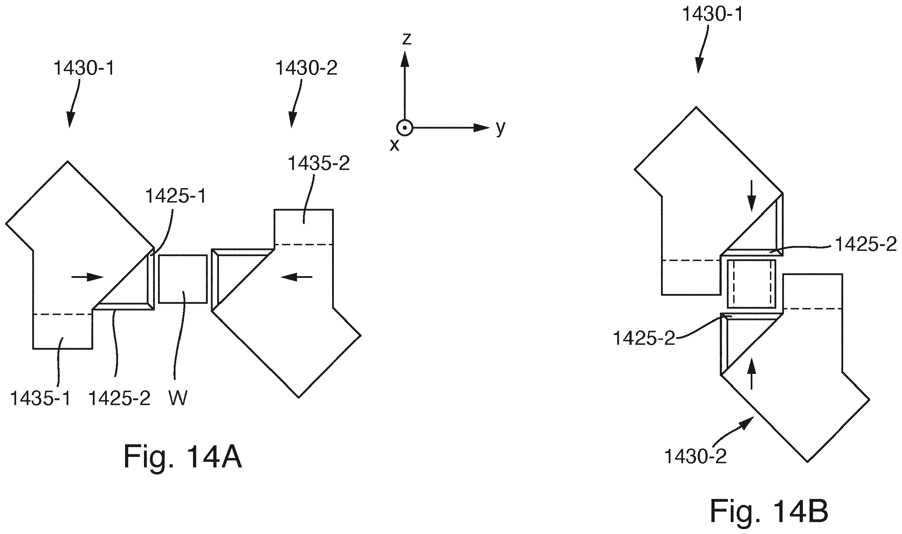

Anhand der Fig. 14A bis 14D wird eine andere Prozessvariante beschrieben, bei der andere Kombinationswerkzeuge 1430-1, 1430-2 verwendet werden. In diese sind ein erstes Kerbwerkzeug 1425-1 und ein zweites Kerbwerkzeug 1425-2 mit zueinander orthogonalen Keilen sowie ein als Schermesser ausgelegtes Schnittwerkzeug 1435-1 integriert.

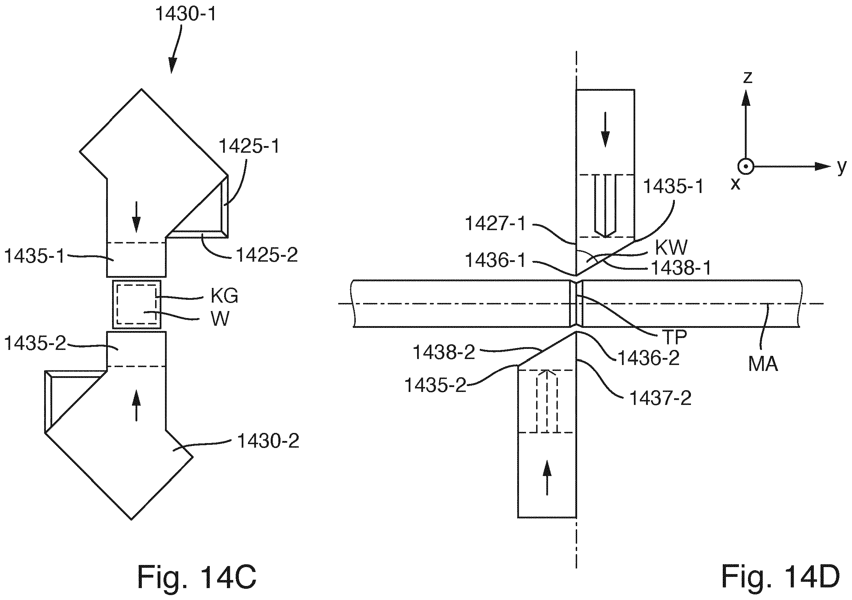

Bei dem Prozess wird ein Werkstück W in Form eines Drahts mit Rechteck-Querschnitt an einer Trennposition zerteilt bzw. getrennt. Dazu wird der Draht W zunächst gleichzeitig an den in y-Richtung gegenüberliegenden ebenen Seitenflächen eingekerbt (Fig. 14A). Danach wird an derselben axialen Position mit denselben Kombinationswerkzeugen 1430-1, 1430-2 der Draht an denjenigen ebenen Seitenflächen eingekerbt, die sich in z-Richtung gegenüberliegen (Fig. 14B). Das Werkstück wird also in einer zweistufigen Kerboperation (bzw. mithilfe zweier Kerboperationen) an allen vier Seitenflächen eingekerbt, so dass dort V-förmig Kerben vorliegen. Die in Fig. 14C gestrichelt dargestellten Kerbgründe KG begrenzen den verjüngten Drahtquerschnitt an der Trennposition.

Nach dem allseitigen Einkerben wird der Draht an der Trennposition in einer Scherschneidoperation, also durch Scherschneiden, vollständig durchtrennt. Dazu ist an den Kombinationswerkzeugen 1430-1, 1430-2 jeweils ein für einen Scherenschnitt ausgebildetes Schnittwerkzeug 1435-1, 1435-2 integriert, wobei eines der Schnittwerkzeuge, beispielsweise das Schnittwerkzeug 1435-1, als Obermesser und das andere Schnittwerkzeug, beispielsweise das Schnittwerkzeug 1435-2, als Untermesser der Schnitteinrichtung fungiert. Die Schnittwerkzeuge 1435-1, 1435-2 können auch als Scherwerkzeuge oder Schermesser bezeichnet werden,

In der Seitenansicht von Fig. 14D ist die Gestalt der Schnittwerkzeuge (Scherschneidwerkzeuge) gut zu erkennen. Jedes der Schnittwerkzeuge 1435-1, 1435-2 hat eine Schneidkante 1436-1, 1436-2, die geradlinig parallel zur y-Richtung verläuft, wenn das Werkzeug am Werkzeughalter der zugehörigen Maschinenachse befestigt und richtig eingerichtet ist. Die Schneidkante ist an einem asymmetrischen Schneidkeil ausgebildet, dessen in der Nähe der Trennposition liegende Begrenzungsfläche (Freifläche) 1437-1, 1437-2 fast parallel zur z-y-Ebene ausgerichtet ist, während die andere Begrenzungsfläche (Druckfläche) 1438-1, 1438-2 mit dieser an der Schneidkante 1436-1 1436-1 einen Keilwinkel KW von weniger als 90° einschließt und somit schräg zur y- und zur z-Richtung verläuft. Der Keilwinkel KW ist ca. halb so groß wie der Keilwinkel KWK der Kerbwerkzeuge, die die vorangegangenen Kerbschritte durchgeführt haben.

Zur Durchführung der Scherschneidoperation ruht der Draht W, wird also nicht vorgeschoben. Die Kombinationswerkzeuge werden mit Hilfe der zugeordneten Maschinenachsen so verfahren, dass die Schneidkanten 1436-1, 1436-2 im Wesentlichen in der Trennposition bzw. der Trennebene des ruhenden Drahtes liegen.

Dazu sind ausgehend von der vorangegangenen letzten Kerboperation Achsbewegungen parallel zur z-Achse und gegenläufige Bewegungen der beiden Schnittwerkzeuge parallel zur x-Richtung erforderlich. Zwischen den der Trennposition TP zugeordneten Freiflächen des Schneidkeils liegt meist ein schmaler Schneidspalt vor, dessen Größe beispielsweise im Bereich von einem oder wenigen Hundertstel Millimetern liegen kann.

Ausgehend von der in Fig. 14D gezeigten relativen Position werden die Scherschneidwerkzeuge dann parallel zur z-Richtung in gegenläufige Richtungen synchron zugestellt (Pfeile). Dabei kommen die Schneidkanten 1436-1, 1436-2 zunächst mehr oder weniger gleichzeitig (im Idealfall gleichzeitig) mit dem Grund der zugewandten Kerben in Kontakt und schieben sich dann weiter ins Innere des Drahtmaterials. Bei weiterem Eindringen der Schneidkeile wirken die Keilflächen 1436-1, 1436-2 als Druckflächen, die das Material von der Trennposition nach außen in gegenläufige Richtung abdrängen. In einer Schneidphase nähern sich die Schneidkanten 1436-1, 1436-2 einander symmetrisch zur Drahtlängsachse (Drahtmitte) MA immer weiter an, bis der zwischenliegende Drahtquerschnitt sehr dünn ist und das Material in einer Reißphase bei Überschreiten der maximalen Scherspannung reißt. Die gegenläufige Zustellung kann gestoppt werden, wenn der Draht durchtrennt ist, bevor die Schneidkanten einander erreichen. Das kann z.B bei relativ harten bzw. spröden Werkstoffen, wie z.B. Federstahl, der Fall sein. Es ist auch möglich, dass die Schneidkanten in der Endphase der Scherschneidoperation aneinander vorbeilaufen. Dies wird regelmäßig beim Scherschneiden von Kupfer oder anderen vergleichbar weichen Metallen der Fall sein.

Mit Hilfe der Scherschneidoperation ist es bei richtiger Einstellung der Prozessparameter möglich, an den abgetrennten Drahtenden Stirnflächen zu erzeugen, die makroskopisch eben und senkrecht zur Drahtlängsachse ausgerichtet sind. Der Endabschnitt des Drahts hat dann die Gestalt eines rechteckförmigen Pyramidenstumpfs mit planer Stirnfläche und eignet sich besonders für großflächige Kontaktierung, beispielsweise mit Hilfe eines Verschweißprozesses.

Die komplette spanlose Trennoperation des Beispiels in Fig. 14 besteht also aus drei Schritten, die wie folgt beschrieben werden können.

Erster Schritt: Zwei rechtwinklig mit Abstand zum Draht angeordnete Keilmesser bewegen sich symmetrisch in Richtung Drahtmitte. Diese Bewegung wird nach einer definierten Zustellung der Werkzeuge gestoppt und somit wird "nur" Material verdrängt und keine Schnitt-/ Trennoperation durchgeführt. Nach diesem Schritt ist das Material zweiseitig gekerbt.

Zweiter Schritt: Zwei weitere rechtwinklig mit Abstand zum Draht angeordnete Keilmesser, jedoch orthogonal angeordnet zu den anderen beiden Keilmessern, bewegen sich ebenfalls symmetrisch in Richtung Drahtmitte. Diese Bewegung wird ebenfalls nach einer definierten Zustellung der Werkzeuge gestoppt und somit wird "nur" Material verdrängt und keine Schnitt-/ Trennoperation durchgeführt. Nach diesem Schritt ist das Material vierseitig gekerbt.

Dritter Schritt: Zwei rechtwinklig mit Abstand zum Draht angeordnete Schermesser bewegen sich symmetrisch in Richtung Drahtmitte. Die Schneiden der beiden Messer bewegen sich solange in Richtung Drahtmitte, bis der Draht abgeschert wird.

Die drei Schritte für das vierseitige Kerben und das anschließende Trennen mittels Scherschnitt sollten in einer Ebene erfolgen. Das Drahtende hat bei rechteckigem Material nach dem Schnitt die Form eines Pyramidenstumpfes.

Prozesse der hier beschriebenen Art können z.B. zum geometrischen Anformen von Drahtenden bei Kupferbauteilen wie Hairpins, Stromschienen, Kontaktstifte, etc. genutzt werden. Auch das Ankerben und Schneiden von Kettengliedern ist damit möglich.

## Patentansprüche

1. Verfahren zur Herstellung konfektionierter Formteile aus Draht, bei dem:
Draht (W) von einem Drahtvorrat eingezogen und einer Drahtverarbeitungsmaschine (100, 800) zugeführt wird,
der Draht in der Drahtverarbeitungsmaschine (100, 800) gerichtet wird, und
Formteile vorgebbarer Drahtlänge von dem gerichteten Draht abgetrennt werden, wobei zum Trennen eines Formteils von dem zugeführten Draht
zunächst an einer für die Trennung vorgesehenen Trennposition (TP) der Draht (W) in wenigstens einer Kerboperation von zwei einander gegenüberliegenden Seiten mittels Kerbwerkzeugen (325-1, 325-2, 925-1, 925-2, 1330-1, 1330-2, 1425-1, 1425-2) derart eingekerbt wird, dass an der Trennposition zwischen gegenüberliegenden Kerben (KB) ein verjüngter Drahtquerschnitt verbleibt; und
danach in einer Zerteilungsoperation der eingekerbte Draht im Bereich des verjüngten Drahtquerschnitts an der Trennposition (TP) getrennt wird, indem zwei Zerteilungswerkzeuge (345-1, 345-2, 945-1, 945-2, 1330-1, 1330-2, 1435-1, 1435-2) an gegenüberliegenden Seiten des Drahts angreifen und in gegenläufige Zustellrichtungen senkrecht zur Drahtachse synchron zugestellt werden, bis das Drahtmaterial an der Trennposition (TP) durchtrennt ist.

2. Verfahren nach Anspruch 1, **dadurch gekennzeichnet, dass** eine Zustellbewegung der vorzugsweise als Umformwerkzeuge ausgebildeten Kerbwerkzeuge (325-1, 325-2, 925-1, 925-2, 1330-1, 1330-2, 1425-1, 1425-2) so gesteuert wird, dass die Kerbwerkzeuge (325-1, 325-2, 925-1, 925-2, 1330-1, 1330-2, 1425-1, 1425-2) in gegenläufige Zustellrichtungen senkrecht zur Drahtachse synchron zugestellt werden und/oder dass eine Eindringtiefe der Kerbwerkzeuge bei mindestens 10%, insbesondere im Bereich von 20% bis 50% der Ausdehnung des ungekerbten Drahts in der ersten Richtung liegt und/oder dass im verjüngten Drahtabschnitt senkrecht zur Drahtlängsrichtung Restbreiten verbleiben, die im Bereich von 90% oder weniger, insbesondere im Bereich von 50% bis 80% des ursprünglichen Durchmessers in der ersten Richtung liegen.

3. Verfahren nach einem der Ansprüche 1 oder 2, **dadurch gekennzeichnet, dass** der Draht (W) nach Abschluss der Kerboperation durch eine Schnittoperation an der Trennposition (TP) getrennt wird, insbesondere durch Beißschneiden oder Scherschneiden,
wobei vorzugsweise im Falle des Beißschneidens bei der Schnittoperation der Draht an der Trennposition (TP) durch Beißschneiden getrennt wird, indem der Draht zwischen zwei als Schnittwerkzeuge (345-1, 345-2, 945-1, 945-2, 1330-1, 1330-2) ausgebildeten Trennwerkzeugen mit keilförmigen Schneiden gehalten und die keilförmigen Schneiden relativ zueinander aufeinander zu bewegt werden, bis das Drahtmaterial an der Trennposition (TP) durchtrennt ist, wobei an den keilförmigen Schneiden ausgebildete Schneidkanten in einer gemeinsamen Ebene liegen,
wobei insbesondere Kerbwerkzeuge (325-1, 325-2, 925-1, 925-2, 1330-1, 1330-2) einander in einer ersten Richtung gegenüberliegen und parallel zur ersten Richtung zugestellt werden, dass die Schnittwerkzeuge mit den keilförmigen Schneiden einander in einer zweiten Richtung gegenüberliegen und parallel zur zweiten Richtung zugestellt werden, und dass die erste und die zweite Richtung senkrecht zueinander verlaufen;
und im Falle des Scherschneidens die Zerteilungsoperation als Scheroperation ausgelegt ist, bei der der Draht an der Trennposition (TP) durch Scherung getrennt wird, indem der Draht zwischen zwei als Scherwerkzeuge (1435-1, 1435-2) ausgebildeten Zerteilungswerkzeugen gehalten wird, die an unterschiedlichen axialen Seiten der Trennposition (TP) angreifen und in gegenläufige Zustellrichtungen senkrecht zur Drahtachse synchron bewegt werden, bis das Drahtmaterial an der Trennposition (TP) durchtrennt ist, wobei vorzugsweisse die Scheroperation als Scherschneidoperation ausgelegt ist, bei der der Draht an der Trennposition (TP) durch Scherschneiden getrennt wird, indem der Draht zwischen einem als Obermesser ausgebildeten Scherschneidwerkzeug und einem als Untermesser ausgebildeten Scherschneidwerkzeug gehalten und Schneiden der Scherschneidwerkzeuge in axial versetzten Ebenen gegenläufig aufeinander zu, insbesondere auch aneinander vorbei bewegt werden, bis das Drahtmaterial an der Trennposition (TP) durchtrennt ist und/oder wobei in der der Scheroperation vorgeschalteten Kerboperation der Draht zunächst an zwei in einer ersten Richtung gegenüberliegen Seiten und danach an zwei in einer zweiten Richtung gegenüberliegen Seiten eingekerbt wird, wobei die erste und die zweite Richtung senkrecht zueinander verlaufen.

4. Verfahren nach einem der vorhergehenden Ansprüche, **dadurch gekennzeichnet, dass** für die Kerboperation und für die Zerteilungsoperation an gegenüberliegenden Seiten des Drahts (W) je ein Kombinationswerkzeug (1330-1, 1330-2, 1430-1, 1430-2) verwendet wird, welches wenigstens ein integriertes Kerbwerkzeug und ein integriertes Zerteilungswerkzeug aufweist, wobei die Kombinationswerkzeuge zeitlich nacheinander paarweise synchron in zwei zueinander senkrechten Richtungen zugestellt werden.

5. Verfahren nach einem der vorhergehenden Ansprüche, **dadurch gekennzeichnet, dass** ein abzutrennender Drahtabschnitt vor der Kerboperation und/oder der Zerteilungsoperation mittels eines Transportgreifers (420) gegriffen und das abgetrennte Formteil nach Abschluss der Zerteilungsoperation mittels des Transportgreifers zu einer nachgeschalteten Arbeitsstation transportiert wird, wobei vorzugsweise der Transportgreifer (420) parallel zu einer Drahttransportachse linear verschiebbar geführt und während der Kerboperation und/oder während der Zerteilungsoperation kraft- und momentenreduziert geschaltet ist, so dass der Transportgreifer Längenausgleichsbewegungen des abzutrennenden Drahtabschnitts während der Kerboperation und/oder während der Zerteilungsoperation schwimmend folgen kann.

6. Drahtverarbeitungsmaschine (100, 800) zur Herstellung konfektionierter Formteile aus Draht (W) umfassend:
eine Einzugseinrichtung zum Einziehen von Draht von einem Drahtvorrat;
einer Richteinheit zum Richten des Drahts; und
eine Trenneinrichtung (300, 900) zum Abtrennen von Formteilen von dem Draht an einer für die Trennung vorgesehenen Trennposition (TP),
wobei die Trenneinrichtung (300, 900) eine Kerbeinrichtung (320, 920) und eine zeitlich nach der Kerbeinrichtung betätigbare Zerteilungseinrichtung (340, 940) aufweist, wobei die Kerbeinrichtung (320, 920) dafür konfiguriert ist, den Draht an einer für die Trennung vorgesehenen Trennposition (TP) in wenigstens einer Kerboperation von zwei einander gegenüberliegenden Seiten mittels Kerbwerkzeugen (325-1, 325-2, 925-1, 925-2, 1330-1, 1330-2, 1425-1, 1425-2) derart einzukerben, dass an der Trennposition zwischen gegenüberliegenden Kerben ein verjüngter Drahtquerschnitt verbleibt, und
die Zerteilungseinrichtung (340, 940) im eingerichteten Zustand zwei Zerteilungswerkzeuge (345-1, 345-2, 945-1, 945-2, 1330-1, 1330-2, 1430-1, 1430-2) aufweist, zwischen denen der Draht (W) hindurchführbar ist, wobei die Zerteilungswerkzeuge zur Durchführung einer Zerteilungsoperation in gegenläufige Richtungen senkrecht zur Drahtachse synchron zustellbar sind, wobei die Zerteilungseinrichtung derart konfiguriert ist, dass der eingekerbte Draht im Bereich des verjüngten Drahtquerschnitts an der Trennposition (TP) getrennt wird, indem die Zerteilungswerkzeuge (345-1, 345-2, 945-1, 945-2, 1330-1, 1330-2, 1435-1, 1435-3) bei der Zerteilungsoperation in gegenläufige Richtungen senkrecht zur Drahtachse synchron zugestellt werden, bis das Drahtmaterial an der Trennposition (TP) durchtrennt ist.

7. Drahtverarbeitungsmaschine nach Anspruch 6, **dadurch gekennzeichnet, dass** die Kerbwerkzeuge (325-1, 325-2, 925-1, 925-2, 1330-1, 1330-2, 1425-1, 1425-2) als Umformwerkzeuge ausgebildet sind derart, dass die Kerben ausschließlich durch Materialumformung ohne Materialabtrag erzeugbar sind und/oder dass die Kerbeinrichtung dafür konfiguriert ist, eine Zustellbewegung der Kerbwerkzeuge (325-1, 325-2, 925-1, 925-2, 1330-1, 1330-2, 1425-1, 1425-2) so zu steuern, dass die Kerbwerkzeuge (325-1, 325-2, 925-1, 925-2, 1330-1, 1330-2, 1425-1, 1425-2) in gegenläufige Zustellrichtungen senkrecht zur Drahtachse synchron zugestellt werden.

8. Drahtverarbeitungsmaschine nach Anspruch 6 oder 7, **dadurch gekennzeichnet, dass** die Zerteilungseinrichtung als Schnitteinrichtung konfiguriert ist und die Zerteilungswerkzeuge als Schnittwerkzeuge ausgelegt sind.

9. Drahtverarbeitungsmaschine nach Anspruch 8, **dadurch gekennzeichnet, dass** die Schnitteinrichtung in Form einer Beißschneideinrichtung ausgelegt ist, die vorzugsweise im eingerichteten Zustand zwei Schnittwerkzeuge (345-1, 345-2, 945-1, 945-2, 1330-1, 1330-2) mit keilförmigen Schneiden aufweist, zwischen denen der Draht (W) hindurchführbar ist, wobei die keilförmigen Schneiden zur Durchführung einer Schnittoperation relativ zueinander aufeinander zu bewegbar sind, wobei die Schneideinrichtung derart konfiguriert ist, dass der eingekerbte Draht im Bereich des verjüngten Drahtquerschnitts an der Trennposition (TP) durch Beißschneiden getrennt wird, indem die keilförmigen Schneiden der Schnittwerkzeuge (345-1, 345-2, 945-1, 945-2, 1330-1, 1330-2) bei der Schnittoperation in einer gemeinsamen Ebene relativ zueinander aufeinander zu bewegt werden, bis das Drahtmaterial an der Trennposition (TP) durchtrennt ist, wobei insbesondere die Kerbwerkzeuge (325-1, 325-2, 925-1, 925-2) einander in einer ersten Richtung gegenüberliegend angeordnet oder anordenbar und parallel zur ersten Richtung zustellbar sind und die Schnittwerkzeuge (345-1, 345-2, 945-1, 945-2) mit den keilförmigen Schneiden einander in einer zweiten Richtung gegenüberliegen angeordnet oder anordenbar und parallel zur zweiten Richtung zustellbar sind, wobei die erste und die zweite Richtung senkrecht zueinander verlaufen.

10. Drahtverarbeitungsmaschine nach Anspruch 8, **dadurch gekennzeichnet, dass** die Zerteilungseinrichtung als Schereinrichtung ausgelegt ist, die derart konfiguriert ist, dass der Draht an der Trennposition (TP) durch Scherung getrennt wird, indem der Draht zwischen zwei als Scherwerkzeuge (1435-1, 1435-2) ausgebildeten Zerteilungswerkzeugen gehalten wird, die an unterschiedlichen axialen Seiten der Trennposition (TP) angreifen und in gegenläufige Zustellrichtungen senkrecht zur Drahtachse synchron bewegbar sind, bis das Drahtmaterial an der Trennposition (TP) durchtrennt ist, wobei insbesondere die Kerbeinrichtung derart konfiguriert ist, dass in der der Scheroperation vorgeschalteten Kerboperation der Draht zunächst an zwei in einer ersten Richtung gegenüberliegen Seiten und danach an zwei in einer zweiten Richtung gegenüberliegen Seiten eingekerbt wird, wobei die erste und die zweite Richtung senkrecht zueinander verlaufen.

11. Drahtverarbeitungsmaschine nach einem der Ansprüche 6 bis 10, **dadurch gekennzeichnet, dass** die Trenneinrichtung an gegenüberliegenden Seiten des Drahts je ein Kombinationswerkzeug (1330-2, 1330-2, 1430-1, 1430-2) aufweist, welches wenigstens ein integriertes Kerbwerkzeug und ein integriertes Trennwerkzeug aufweist, wobei Maschinenachsen der Drahtverarbeitungsmaschine derart konfiguriert sind, dass die Kombinationswerkzeuge zeitlich nacheinander paarweise synchron in zwei zueinander senkrechten Richtungen zustellbar sind.

12. Drahtverarbeitungsmaschine nach einem der Ansprüche 6 bis 11, **dadurch gekennzeichnet, dass** die Kerbwerkzeuge (325-1, 325-2, 925-1, 925-2, 1330-1, 1330-2, 1425-1, 1425-2) als dachförmige Kerbkeile mit scharfem oder abgerundetem Spitzenbereich ausgebildet sind, wobei vorzugsweise ein von Keilflächen eingeschlossener Keilwinkel (KWK) im Bereich von 90° bis 140° liegt und/oder dass die keilförmigen Schneiden der Schnittwerkzeuge (345-1, 345-2, 945-1, 945-2) einen Keilwinkel (KWS) im Bereich von 90° bis 140° aufweisen.

13. Drahtverarbeitungsmaschine nach einem der Ansprüche 6 bis 12, **dadurch gekennzeichnet, dass** die Kerbwerkzeuge (325-1, 325-2, 925-1, 925-2, 1330-1, 1330-2, 1425-1, 1425-2) der Kerbeinrichtung und die Schneiden der Schnittwerkzeuge (345-1, 345-2, 945-1, 945-2, 1330-1, 1330-2, 1435-1, 1435-2) der Schnitteinrichtung in einer gemeinsamen Ebene angeordnet sind.

14. Drahtverarbeitungsmaschine nach einem der Ansprüche 6 bis 13, **dadurch gekennzeichnet, dass** die Zerteilungseinrichtung (300, 900) parallel zur Durchlaufrichtung des Drahts (W) schwimmend gelagert ist oder dass die Zerteilungseinrichtung mithilfe eines Antriebs aktiv parallel zur Durchlaufrichtung des Drahts (W) bewegbar ist.

15. Drahtverarbeitungsmaschine nach einem der Ansprüche 6 bis 14, **gekennzeichnet durch** einen Transportgreifer (420) zum Greifen eines abzutrennenden Drahtabschnitts vor der Kerboperation und/oder der Zerteilungsoperation und zum Transportieren des abgetrennten Drahtabschnitts nach Abschluss der Zerteilungsoperation zu einer nachgeschalteten Arbeitsstation, wobei vorzugsweise der Transportgreifer (420) parallel zu einer Drahttransportachse linear verschiebbar geführt und während der Kerboperation und/oder während der Zerteilungsoperation kraft- und momentenreduziert schaltbar ist, so dass der Transportgreifer Längenausgleichsbewegungen des abzutrennenden Drahtabschnitts während der Kerboperation und/oder während der Zerteilungsoperation schwimmend folgen kann.

## Claims

1. Method for producing prepared shaped parts from wire, wherein:
wire (W) is drawn in from a wire supply and fed to a wire-processing machine (100, 800),
the wire is straightened in the wire-processing machine (100, 800), and
shaped parts of predefinable wire length are separated off from the straightened wire, wherein, for separating a shaped part from the fed wire, firstly, at a separation position (TP) intended for separation, the wire (W) is notched in at least one notching operation from two mutually oppositely situated sides by means of notching tools (325-1, 325-2, 925-1, 925-2, 1330-1, 1330-2, 1425-1, 1425-2) in such a way that a narrowed wire cross section remains between oppositely situated notches (KB) at the separation position; and,
subsequently, in a dividing operation, the notched wire is separated in the region of the narrowed wire cross section at the separation position (TP) in that two dividing tools (345-1, 345-2, 945-1, 945-2, 1330-1, 1330-2, 1435-1, 1435-2) act on oppositely situated sides of the wire and are advanced synchronously perpendicularly to the wire axis in opposite advancement directions until the wire material has been severed at the separation position (TP) .

2. Method according to Claim 1, **characterized in that** an advancement movement of the notching tools (325-1, 325-2, 925-1, 925-2, 1330-1, 1330-2, 1425-1, 1425-2), which are preferably in the form of shaping tools, is controlled in such a way that the notching tools (325-1, 325-2, 925-1, 925-2, 1330-1, 1330-2, 1425-1, 1425-2) are advanced synchronously perpendicularly to the wire axis in opposite advancement directions and/or that a penetration depth of the notching tools is at least 10%, in particular in the range of 20% to 50%, of the extent of the unnotched wire in the first direction and/or that, in the narrowed cross section, perpendicularly to the wire longitudinal direction, there remain residual widths in the range of 90% or less, in particular in the range of 50% to 80%, of the original diameter in the first direction.

3. Method according to either of Claims 1 and 2, **characterized in that**, after completion of the notching operation, the wire (W) is separated at the separation position (TP) by a cutting operation, in particular by bite cutting or shear cutting,
wherein preferably, in the case of bite cutting, during the cutting operation, the wire is separated at the separation position (TP) by bite cutting **in that** the wire is held between two separating tools, in the form of cutting tools (345-1, 345-2, 945-1, 945-2, 1330-1, 1330-2), with wedge-shaped cutters and the wedge-shaped cutters are moved relative to one another, towards one another, until the wire material has been severed at the separation position (TP), wherein cutting edges formed on the wedge-shaped cutters lie in a common plane,
wherein in particular notching tools (325-1, 325-2, 925-1, 925-2, 1330-1, 1330-2) are situated opposite one another in a first direction and are advanced parallel to the first direction, **in that** the cutting tools with the wedge-shaped cutters are situated opposite one another in a second direction and are advanced parallel to the second direction, and **in that** the first and second directions extend perpendicularly to one another;
and, in the case of shear cutting, the dividing operation is configured as a shearing operation, wherein the wire is separated at the separation position (TP) by shearing **in that** the wire is held between two dividing tools, in the form of shearing tools (1435-1, 1435-2), which act on different axial sides of the separation position (TP) and are moved synchronously perpendicularly to the wire axis in opposite advancement directions until the wire material has been severed at the separation position (TP), wherein preferably the shearing operation is configured as a shear-cutting operation, wherein the wire is separated at the separation position (TP) by shear cutting **in that** the wire is held between a shear-cutting tool in the form of a top blade and a shear-cutting tool in the form of a bottom blade and cutters of the shear-cutting tools are moved in opposite directions towards one another, in particular also past one another, in axially offset planes until the wire material has been severed at the separation position (TP), and/or wherein, in the notching operation preceding the shearing operation, the wire is firstly notched on two sides situated opposite one another in a first direction and is subsequently notched on two sides situated opposite one another in a second direction, wherein the first and second directions extend perpendicularly to one another.

4. Method according to one of the preceding claims, **characterized in that**, for the notching operation and for the dividing operation, use is made of a combination tool (1330-1, 1330-2, 1430-1, 1430-2) on oppositely situated sides of the wire (W) in each case, which combination tool has at least one integrated notching tool and one integrated dividing tool, wherein the combination tools are, temporally in succession, advanced synchronously in pairs in two mutually perpendicular directions.

5. Method according to one of the preceding claims, **characterized in that**, prior to the notching operation and/or the dividing operation, a wire portion to be separated off is gripped by means of a transport gripper (420), and, after completion of the dividing operation, the shaped part separated off is transported by means of the transport gripper to a downstream work station, wherein preferably the transport gripper (420) is guided so as to be linearly displaceable parallel to a wire transport axis and, during the notching operation and/or during the dividing operation, is switched in a force- and torque-reduced manner such that, during the notching operation and/or during the dividing operation, the transport gripper can, in a floating manner, follow longitudinal compensation movements of the wire portion to be separated off.

6. Wire-processing machine (100, 800) for producing prepared shaped parts from wire (W), comprising:
a drawing-in device for drawing in wire from a wire supply;
a straightening unit for straightening the wire; and a separating device (300, 900) for separating shaped parts off from the wire at a separation position (TP) intended for separation,
wherein the separating device (300, 900) has a notching device (320, 920) and a dividing device (340, 940) which is able to be actuated temporally after the notching device, wherein the notching device (320, 920) is configured to notch the wire at a separation position (TP) intended for separation in at least one notching operation from two mutually oppositely situated sides by means of notching tools (325-1, 325-2, 925-1, 925-2, 1330-1, 1330-2, 1425-1, 1425-2) in such a way that a narrowed wire cross section remains between oppositely situated notches at the separation position, and
the dividing device (340, 940), in the set-up state, has two dividing tools (345-1, 345-2, 945-1, 945-2, 1330-1, 1330-2, 1430-1, 1430-2) between which the wire (W) is able to be guided, wherein, for carrying out a dividing operation, the dividing tools are able to be advanced synchronously perpendicularly to the wire axis in opposite directions, wherein the dividing device is configured in such a way that the notched wire is separated in the region of the narrowed wire cross section at the separation position (TP) in that the dividing tools (345-1, 345-2, 945-1, 945-2, 1330-1, 1330-2, 1435-1, 1435-3), during the dividing operation, are advanced synchronously perpendicularly to the wire axis in opposite directions until the wire material has been severed at the separation position (TP).

7. Wire-processing machine according to Claim 6, **characterized in that** the notching tools (325-1, 325-2, 925-1, 925-2, 1330-1, 1330-2, 1425-1, 1425-2) are in the form of shaping tools in such a way that the notches are able to be produced exclusively by material deformation, without removal of material, and/or **in that** the notching device is configured to control an advancement movement of the notching tools (325-1, 325-2, 925-1, 925-2, 1330-1, 1330-2, 1425-1, 1425-2) in such a way that the notching tools (325-1, 325-2, 925-1, 925-2, 1330-1, 1330-2, 1425-1, 1425-2) are advanced synchronously perpendicularly to the wire axis in opposite advancement directions.

8. Wire-processing machine according to Claim 6 or 7, **characterized in that** the dividing device is configured as a cutting device, and the dividing tools are in the form of cutting tools.

9. Wire-processing machine according to Claim 8, **characterized in that** the cutting device is in the form of a bite-cutting device, which preferably, in the set-up state, has two cutting tools (345-1, 345-2, 945-1, 945-2, 1330-1, 1330-2) with wedge-shaped cutters between which the wire (W) is able to be guided, wherein, for carrying out a cutting operation, the wedge-shaped cutters are able to be moved relative to one another, towards one another, wherein the cutting device is configured in such a way that the notched wire is separated in the region of the narrowed wire cross section at the separation position (TP) by bite cutting **in that** the wedge-shaped cutters of the cutting tools (345-1, 345-2, 945-1, 945-2, 1330-1, 1330-2), during the dividing operation, are moved in a common plane relative to one another, towards one another, until the wire material has been severed at the separation position (TP), wherein in particular the notching tools (325-1, 325-2, 925-1, 925-2) are arranged or arrangeable so as to be situated opposite one another in a first direction and are able to be advanced parallel to the first direction, and the cutting tools (345-1, 345-2, 945-1, 945-2) with the wedge-shaped cutters are arranged or arrangeable so as to be situated opposite one another in a second direction and are able to be advanced parallel to the second direction, wherein the first and second directions extend perpendicularly to one another.

10. Wire-processing machine according to Claim 8, **characterized in that** the cutting device is in the form of a shear-cutting device, which is configured in such a way that the wire is separated at the separation position (TP) by shearing **in that** the wire is held between two dividing tools, in the form of shearing tools (1435-1, 1435-2), which act on different axial sides of the separation position (TP) and are able to be moved synchronously perpendicularly to the wire axis in opposite advancement directions until the wire material has been severed at the separation position (TP), wherein in particular the notching device is configured in such a way that, in the notching operation preceding the shearing operation, the wire is firstly notched on two sides situated opposite one another in a first direction and is subsequently notched on two sides situated opposite one another in a second direction, wherein the first and second directions extend perpendicularly to one another.

11. Wire-processing machine according to one of Claims 6 to 10, **characterized in that** the separating device has a combination tool (1330-2, 1330-2, 1430-1, 1430-2) on oppositely situated sides of the wire in each case, which combination tool has at least one integrated notching tool and one integrated dividing tool, wherein machine axes of the wire-processing machine are configured in such a way that the combination tools are, temporally in succession, able to be advanced synchronously in pairs in two mutually perpendicular directions.

12. Wire-processing machine according to one of Claims 6 to 11, **characterized in that** the notching tools (325-1, 325-2, 925-1, 925-2, 1330-1, 1330-2, 1425-1, 1425-2) are in the form of roof-shaped notching wedges with a sharp or rounded tip region, wherein preferably a wedge angle (KWK) included by wedge surfaces is in the range 90° to 140°, and/or **in that** the wedge-shaped cutters of the cutting tools (345-1, 345-2, 945-1, 945-2) have a wedge angle (KWS) in the range 90° to 140°.

13. Wire-processing machine according to one of Claims 6 to 12, **characterized in that** the notching tools (325-1, 325-2, 925-1, 925-2, 1330-1, 1330-2, 1425-1, 1425-2) of the notching device and the cutters of the cutting tools (345-1, 345-2, 945-1, 945-2, 1330-1, 1330-2, 1435-1, 1435-2) of the cutting device are arranged in a common plane.

14. Wire-processing machine according to one of Claims 6 to 13, **characterized in that** the dividing device (300, 900) is mounted in a floating manner parallel to the direction of passage of the wire (W), or **in that** the dividing device is able to be moved actively parallel to the direction of passage of the wire (W) with the aid of a drive.

15. Wire-processing machine according to one of Claims 6 to 14, **characterized by** a transport gripper (420) for gripping a wire portion to be separated off prior to the notching operation and/or the dividing operation and for transporting the wire portion separated off to a downstream work station after completion of the dividing operation, wherein preferably the transport gripper (420) is guided so as to be linearly displaceable parallel to a wire transport axis and, during the notching operation and/or during the dividing operation, is able to be switched in a force- and torque-reduced manner such that, during the notching operation and/or during the dividing operation, the transport gripper can, in a floating manner, follow longitudinal compensation movements of the wire portion to be separated off.

## Revendications

1. Procédé de fabrication de pièces préformées surmoulées à partir d'un fil métallique, procédé dans lequel :
le fil métallique(W) est tiré d'une réserve de fil métallique et amené à une machine de traitement de fil métallique (100, 800),
le fil métallique est redressé dans la machine de traitement de fil métallique (100, 800), et
les pièces préformées d'une longueur de fil métallique prédéterminée sont séparées du fil métallique redressé, la séparation d'une pièce préformée du fil métallique amené impliquant
d'abord d'entailler, à une position de séparation (TP) prévue pour la séparation, le fil métallique (W) dans au moins une opération d'entaillage depuis deux côtés opposés à l'aide d'outils d'entaillage (325-1, 325-2, 925 -1, 925-2, 1330-1, 1330-2, 1425-1, 1425-2) de manière à ce qu'il subsiste une section transversale réduite du fil métallique à la position de séparation entre des entailles opposées (KB) ; et
puis de séparer, lors d'une opération de séparation, le fil métallique entaillé dans la zone de la section transversale réduite du fil métallique à la position de séparation (TP) en ce que deux outils de séparation (345-1, 345-2, 945-1, 945-2, 1330-1, 1330-2, 1435-1, 1435-2) s'engagent sur des côtés opposés du fil métallique et avancent de manière synchrone dans des directions d'avance opposées perpendiculaires à l'axe du fil métallique jusqu'à sectionner le matériau du fil métallique à la position de séparation (TP).

2. Procédé selon la revendication 1, **caractérisé en ce qu'**un mouvement d'avance des outils d'entaillage (325-1, 325-2, 925-1, 925-2, 1330-1, 1330-2, 1425-1, 1425-2), qui sont de préférence conçus comme des outils de formage, est commandé de telle sorte que les outils d'entaillage (325-1, 325-2, 925-1, 925-2, 1330-1, 1330-2, 1425-1, 1425-2) soient avancés de manière synchrone dans des directions d'avance opposées perpendiculaires à l'axe du fil métallique et/ou qu'une profondeur de pénétration des outils d'entaillage soit d'au moins 10 %, notamment de l'ordre de 20 % à 50 % de l'extension du fil métallique non entaillé dans la première direction et/ou qu'il subsiste dans la portion de fil métallique réduite, perpendiculairement à la direction longitudinale du fil métallique, des largeurs résiduelles qui sont de l'ordre de 90 % ou moins, en particulier de l'ordre de 50 % à 80 % du diamètre d'origine dans la première direction.

3. Procédé selon l'une des revendications 1 ou 2, **caractérisé en ce que**, une fois que l'opération d'entaillage est terminée, le fil métallique (W) est séparé à la position de séparation (TP) par une opération de coupe, notamment en ciseaux ou par cisaillement,
de préférence, dans le cas d'une coupe en ciseaux lors de l'opération de coupe, le fil métallique étant séparé à la position de séparation (TP) par coupe en ciseaux du fait que le fil métallique est maintenu entre deux outils de séparation conçus comme des outils de coupe (345-1, 345-2, 945-1, 945- 2, 1330-1, 1330-2) et munis de tranchants en forme de coin et les tranchants en forme de coin sont déplacés les uns par rapport aux autres jusqu'à ce que le matériau du fil métallique soit sectionné à la position de séparation (TP), les bords de coupe formés sur les tranchants en forme de coin étant situés dans un plan commun,
en particulier des outils d'entaillage (325-1, 325-2, 925-1, 925-2, 1330-1, 1330-2) étant opposés dans une première direction et étant avancés parallèlement à la première direction, **en ce que** les outils de coupe munis des tranchants en forme de coin soient opposés dans une deuxième direction et avancés parallèlement à la deuxième direction, et **en ce que** les première et deuxième directions soient perpendiculaires l'une à l'autre ;
et dans le cas d'une coupe par cisaillement, l'opération de séparation étant conçue comme une opération de cisaillement dans laquelle le fil métallique est séparé par cisaillement à la position de séparation (TP) du fait que le fil métallique est maintenu entre deux outils de séparation qui sont conçus comme des outils de cisaillement (1435-1, 1435-2) et qui s'engagent sur différents côtés axiaux de la position de séparation (TP) et sont déplacés de manière synchrone dans des directions d'avance opposées perpendiculaires à l'axe du fil métallique jusqu'à ce que le matériau du fil métallique soit sectionné à la position de séparation (TP), l'opération de cisaillement étant de préférence conçue comme une opération de coupe par cisaillement dans laquelle le fil métallique est séparé à la position de séparation (TP) par coupe par cisaillement du fait que le fil métallique est maintenu entre un outil de coupe par cisaillement conçu comme un couteau supérieur et un outil de coupe par cisaillement conçu comme un couteau inférieur et des tranchants des outils de coupe par cisaillement sont déplacés dans des directions opposées les unes aux autres dans des plans décalés axialement, en particulier également en passant les uns devant les autres jusqu'à ce que le matériau du fil métallique soit sectionné à la position de séparation (TP) et/ou, lors de l'opération d'entaillage précédant l'opération de cisaillement, le fil métallique étant entaillé d'abord sur deux côtés opposés dans une première direction puis sur deux côtés opposés dans une deuxième direction, les première et deuxième directions étant perpendiculaires l'une à l'autre.

4. Procédé selon l'une des revendications précédentes, **caractérisé en ce qu'**un outil combiné (1330-1, 1330-2, 1430-1, 1430-2) est utilisé pour l'opération d'entaillage et pour l'opération de séparation sur des côtés opposés du fil métallique (W), lequel outil combiné comporte au moins un outil d'entaillage intégré et un outil de séparation intégré, les outils combinés étant avancés l'un après l'autre de manière synchrone par paires dans deux directions perpendiculaires l'une à l'autre.

5. Procédé selon l'une des revendications précédentes, **caractérisé en ce qu'**une portion de fil métallique à séparer est saisie au moyen d'une pince de transport (420) avant l'opération d'entaillage et/ou l'opération de séparation et la pièce préformée séparée est transportée vers un poste de travail en aval au moyen de la pince de transport une fois que l'opération de séparation est terminée, la pince de transport (420) étant de préférence guidée de manière à pouvoir coulisser linéairement parallèlement à un axe de transport de fil métallique et étant commutée pour réduire la force et le couple pendant l'opération d'entaillage et/ou pendant l'opération de séparation de sorte que la pince de transport puisse suivre de manière flottante des mouvements de compensation de longueur de la portion de fil métallique à séparer pendant l'opération d'entaillage et/ou pendant l'opération de séparation.

6. Machine de traitement de fil métallique (100, 800) destinée à la fabrication de pièces préformées surmoulées à partir d'un fil métallique (W), ladite machine comprenant :
un dispositif de tirage destiné à tirer le fil métallique d'une réserve de fil métallique ;
une unité de redressage destinée à redresser le fil métallique ; et
un dispositif de séparation (300, 900) destiné à séparer les pièces préformées du fil métallique à une position de séparation (TP) prévue pour la séparation,
le dispositif de séparation (300, 900) comportant un dispositif d'entaillage (320, 920) et un dispositif de séparation (340, 940) qui peut être actionné temporellement après le dispositif d'entaillage,
le dispositif d'entaillage (320, 920) étant configuré pour entailler le fil métallique à une position de séparation (TP) prévue pour la séparation lors d'au moins une opération d'entaillage depuis deux côtés opposés au moyen d'outils d'entaillage (325-1, 325-2, 925-1, 925- 2, 1330-1, 1330-2, 1425-1, 1425-2) de manière à ce qu'il subsiste une portion transversale réduite du fil métallique à la position de séparation entre des entailles opposées, et
le dispositif de séparation (340, 940) comportant dans l'état adapté deux outils de séparation (345-1, 345-2, 945-1, 945-2, 1330-1, 1330-2, 1430-1, 1430-2) entre lesquels le fil métallique (W) peut être guidé, les outils de séparation pouvant être avancés de manière synchrone dans des directions opposées perpendiculaires à l'axe du fil métallique pour effectuer une opération de séparation, le dispositif de séparation étant configuré de manière à ce que le fil métallique entaillé soit séparé dans la zone de la section transversale réduite du fil métallique à la position de séparation (TP) du fait que les outils de séparation (345-1, 345-2, 945-1, 945-2, 1330-1, 1330-2, 1435-1, 1435-3) sont avancés de manière synchrone dans des directions opposées perpendiculaires à l'axe du fil métallique pendant l'opération de séparation jusqu'à ce que le matériau du fil métallique soit sectionné à la position de séparation (TP).

7. Machine de traitement de fil métallique selon la revendication 6, **caractérisée en ce que** les outils d'entaillage (325-1, 325-2, 925-1, 925-2, 1330-1, 1330-2, 1425-1, 1425-2) sont conçus comme des outils de formage de manière à ce que les entailles puissent être réalisées exclusivement par formage de matière sans enlèvement de matière et/ou **en ce que** le dispositif d'entaillage est configuré pour commander un mouvement d'avance des outils d'entaillage (325-1, 325-2, 925-1, 925-2, 1330-1, 1330-2, 1425-1, 1425-2) de sorte que les outils d'entaillage (325-1, 325-2, 925-1, 925-2, 1330-1, 1330-2, 1425-1, 1425-2) soient avancés de manière synchrone dans des directions d'avance opposées perpendiculaires à l'axe du fil métallique.

8. Machine de traitement de fil métallique selon la revendication 6 ou 7, **caractérisée en ce que** le dispositif de séparation est configuré comme un dispositif de coupe et les outils de séparation sont conçus comme des outils de coupe.

9. Machine de traitement de fil métallique selon la revendication 8, **caractérisée en ce que** le dispositif de coupe est conçu sous la forme d'un dispositif de coupe à ciseaux qui comporte de préférence à l'état adapté deux outils de coupe (345-1, 345-2, 945-1, 945-2, 1330-1, 1330-2) munis de tranchants en forme de coin entre lesquels le fil métallique (W) peut être guidé, les tranchants en forme de coin pouvant être déplacés les uns par rapport aux autres pour effectuer une opération de coupe, le dispositif de coupe étant configuré de manière à ce que le fil métallique entaillé est séparé dans la zone de la section transversale réduite du fil métallique à la position de séparation (TP) par une coupe par ciseaux du fait que les tranchants en forme de coin des outils de coupe (345-1, 345-2, 945-1, 945-2, 1330-1, 1330-2) sont déplacés les uns par rapport aux autres dans un plan commun pendant l'opération de coupe jusqu'à ce que le matériau du fil métallique soit sectionné à la position de séparation (TP), en particulier les outils d'entaillage (325-1, 325-2, 925-1, 925-2) étant disposés ou pouvant être disposés de manière opposée les uns aux autres dans une première direction et pouvant être amenés parallèlement à la première direction et les outils de coupe (345-1, 345-2, 945-1, 945-2) munis des tranchants en forme de coin étant disposés ou pouvant être disposés de manière opposée les uns aux autres dans une deuxième direction et pouvant être avancés parallèlement à la deuxième direction, les première et deuxième directions étant perpendiculaires l'une à l'autre.

10. Machine de traitement de fil métallique selon la revendication 8, **caractérisée en ce que** le dispositif de séparation est conçu comme un dispositif de cisaillement qui est configuré de manière à ce que le fil métallique est séparé par cisaillement à la position de séparation (TP) du fait que le fil métallique est maintenu entre deux des outils de séparation conçus comme des outils de cisaillement (1435-1, 1435-2), lesquels outils de séparation s'engagent sur différents côtés axiaux de la position de séparation (TP) et peuvent être déplacés de manière synchrone dans des directions d'avance opposées perpendiculaires à l'axe du fil métallique jusqu'à ce que le matériau du fil métallique soit sectionné à la position de séparation (TP), notamment le dispositif d'entaillage étant configuré de manière à ce que, lors de l'opération d'entaillage précédant l'opération de cisaillement, le fil métallique soit entaillé d'abord sur deux côtés opposés dans une première direction puis sur deux côtés opposés dans un deuxième direction, les première et deuxième directions étant perpendiculaires l'une à l'autre.

11. Machine de traitement de fil métallique selon l'une des revendications 6 à 10, **caractérisée en ce que** le dispositif de séparation comporte sur chacun des côtés opposés du fil métallique un outil combiné (1330-2, 1330-2, 1430-1, 1430-2) qui comporte au moins un outil d'entaillage intégré et un outil de séparation intégré, des axes de machine de la machine de traitement de fil métallique étant configurés de manière à ce que les outils combinés soient avancés de manière synchrone par paires les uns après les autres dans deux directions perpendiculaires l'une à l'autre.

12. Machine de traitement de fil métallique selon l'une des revendications 6 à 11, **caractérisée en ce que** les outils d'entaillage (325-1, 325-2, 925-1, 925-2, 1330-1, 1330-2, 1425-1, 1425-2) sont conçus sous forme de coins d'entaillage en forme de toit pourvus d'une zone de sommet pointue ou arrondie, de préférence un angle de coin (KWK) formé par des surfaces de coin étant de l'ordre de 90° à 140° et/ou les tranchants en forme de coin des outils de coupe (345-1, 345-2, 945-1, 945-2) formant un angle de coin (KWS) de l'ordre de 90° à 140°.

13. Machine de traitement de fil métallique selon l'une des revendications 6 à 12, **caractérisée en ce que** les outils d'entaillage (325-1, 325-2, 925-1, 925-2, 1330-1, 1330-2, 1425-1, 1425-2) du dispositif d'entaillage et les tranchants des outils de coupe (345-1, 345-2, 945-1, 945-2, 1330-1, 1330-2, 1435-1, 1435-2) du dispositif de coupe sont disposés dans un plan commun.

14. Machine de traitement de fil métallique selon l'une des revendications 6 à 13, **caractérisée en ce que** le dispositif de séparation (300, 900) est monté de manière flottante parallèlement au sens de défilement du fil métallique (W) ou **en ce que** le dispositif d'avance peut être déplacé activement parallèlement au sens de défilement du fil métallique (W) à l'aide d'un entraînement.

15. Machine de traitement de fil métallique selon l'une des revendications 6 à 14, **caractérisée par** une pince de transport (420) destinée à saisir une portion de fil métallique à séparer avant l'opération d'entaillage et/ou l'opération de séparation et transporter la portion de fil métallique séparé vers un poste de travail en aval une fois que l'opération de séparation est terminée, de préférence la pince de transport (420) étant guidée de manière à pouvoir coulisser linéairement parallèlement à un axe de transport de fil métallique et pouvant être commutée avec une force et un couple réduits pendant l'opération d'entaillage et/ou pendant l'opération de séparation de sorte que la pince de transport puisse suivre de manière flottante des mouvements de compensation de longueur de la portion de fil métallique à séparer lors de l'opération d'entaillage et/ou lors de l'opération de séparation.
